(19) **Europäisches Patentamt**
**European Patent Office**
**Office européen des brevets**

(11) **EP 4 156 039 A1**

(12) # EUROPEAN PATENT APPLICATION
published in accordance with Art. 153(4) EPC

(43) Date of publication:
**29.03.2023 Bulletin 2023/13**

(51) International Patent Classification (IPC):
***G06N 20/00*** (2019.01)

(21) Application number: **21829619.2**

(86) International application number:
**PCT/CN2021/100098**

(22) Date of filing: **15.06.2021**

(87) International publication number:
**WO 2021/259090 (30.12.2021 Gazette 2021/52)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **23.06.2020 CN 202010593841**

(71) Applicant: **Huawei Technologies Co., Ltd.
Longgang District,
Shenzhen,
Guangdong 518129 (CN)**

(72) Inventors:
• **SHAO, Yunfeng**
  **Shenzhen, Guangdong 518129 (CN)**
• **GUO, Kaiyang**
  **Shenzhen, Guangdong 518129 (CN)**
• **MOENS, Vincent**
  **Shenzhen, Guangdong 518129 (CN)**
• **WANG, Jun**
  **Shenzhen, Guangdong 518129 (CN)**
• **YANG, Chunchun**
  **Shenzhen, Guangdong 518129 (CN)**

(74) Representative: **Grünecker Patent- und
Rechtsanwälte
PartG mbB
Leopoldstraße 4
80802 München (DE)**

(54) **METHOD AND APPARATUS FOR FEDERATED LEARNING, AND CHIP**

(57)     This application provides a federated learning method and apparatus, and a chip, and relates to the artificial intelligence field. The method is suitable for processing a machine learning model whose parameter obeys a distribution. The method includes: A second node sends a prior distribution of a parameter in a federated model to at least one first node. After receiving the prior distribution of the parameter in the federated model, the at least one first node performs training based on the prior distribution of the parameter in the federated model and local training data of the first node, to obtain a posterior distribution of a parameter in a local model of the first node. After the local training ends, the at least one first node feeds back the posterior distribution of the parameter in the local model to the second node, so that the second node updates the prior distribution of the parameter in the federated model based on the posterior distribution of the parameter in the local model of the at least one first node. Nodes exchange a prior distribution and a posterior distribution with each other, so that federated learning of a machine learning model whose parameter obeys a distribution is implemented, thereby helping reduce training time of federated learning and overheads of communication between the nodes.

FIG. 4

EP 4 156 039 A1

**Description**

**TECHNICAL FIELD**

This application relates to the artificial intelligence field, and in particular, to a federated learning method and apparatus, and a chip.

**BACKGROUND**

As users have increasingly will to protect personal privacy data, user data of data owners cannot be communicated with each other, and large and small "data islands" are formed. The "data island" poses a new challenge to massive data-based artificial intelligence (artificial intelligence, AI), that is, how to train a machine learning model without permission to obtain enough training data?

Federated learning (federated learning) is proposed due to existence of the "data island". However, conventional federated learning can only be used in a machine learning model whose training parameter has a fixed value, resulting in relatively long training time of federated learning and relatively high communication overheads.

**SUMMARY**

This application provides a federated learning method and apparatus, to support federated learning of a machine learning model whose parameter obeys a distribution, thereby reducing training time of federated learning and communication overheads.

According to a first aspect, a federated learning method is provided, including: A first node receives, from a second node, a prior distribution of a parameter in a federated model, where the federated model is a machine learning model whose parameter obeys a distribution. The first node performs training based on the prior distribution of the parameter in the federated model and local training data of the first node, to obtain a posterior distribution of a parameter in a local model of the first node.

Nodes exchange a prior distribution and a posterior distribution of a model parameter with each other, so that federated learning of a machine learning model whose parameter obeys a distribution is implemented. The machine learning model whose parameter obeys a distribution can give probabilities of various values of a parameter in advance, and the probabilities of the various values of the parameter can represent advantages and disadvantages of various possible improvement directions of the machine learning model. Therefore, performing federated learning on the machine learning model whose parameter obeys a distribution helps a node participating in federated learning to find a better improvement direction of the machine learning model, thereby reducing training time of federated learning and overheads of communication between the nodes.

With reference to the first aspect, in some implementations of the first aspect, the method further includes: The first node determines an uncertainty degree of the local model based on the posterior distribution of the parameter in the local model. When the uncertainty degree of the local model meets a first preset condition, the first node sends the posterior distribution of the parameter in the local model to the second node.

The uncertainty degree of the local model can well measure a degree of matching between the local training data and the federated model, and therefore can indicate importance of the first node to federated learning. Therefore, when the uncertainty degree of the local model is used as an indicator measuring whether the first node feeds back a training result to the second node, a training process of the federated model can be more controllable. For example, when it is expected to converge the federated model quickly, a first node whose local model has a relatively high uncertainty degree may be prevented from feeding back a local training result. For another example, when it is expected to enlarge a capacity of the federated model, a first node whose local model has a relatively high uncertainty degree may be required to feed back a local training result. In addition, a local model whose uncertainty degree does not meet the first preset condition is not sent to the second node, thereby reducing overheads of communication between the nodes.

With reference to the first aspect, in some implementations of the first aspect, the uncertainty degree of the local model is measured based on at least one piece of the following information: a variance of the posterior distribution of the parameter in the local model, a convergence speed of the posterior distribution of the parameter in the local model, or inferential accuracy of the posterior distribution of the parameter in the local model.

With reference to the first aspect, in some implementations of the first aspect, the method further includes: The first node determines an uncertainty degree of a first parameter in the local model based on a posterior distribution of the first parameter, where the parameter in the local model includes at least one parameter, and the first parameter is any of the at least one parameter. When the uncertainty degree of the first parameter meets a second preset condition, the first node sends the posterior distribution of the first parameter to the second node.

The uncertainty degree of the parameter in the local model can well measure importance of the parameter to the local model. Through calculation of the uncertainty degree of the parameter, the first node may upload only a training result for a parameter important to the local model. In this way, overheads of communication between the nodes can be reduced, and communication efficiency can be improved.

With reference to the first aspect, in some implementations of the first aspect, the uncertainty degree of the first parameter is measured based on a variance of the posterior distribution of the first parameter.

With reference to the first aspect, in some implementations of the first aspect, the method further includes: The first node determines an uncertainty degree of the local model based on the posterior distribution of the parameter in the local model. When the uncertainty degree of the local model meets a first preset condition, the first node determines an uncertainty degree of a first parameter in the local model based on a posterior distribution of the first parameter, where the local model includes at least one parameter, and the first parameter is any of the at least one parameter. When the uncertainty degree of the first parameter meets a second preset condition, the first node sends the posterior distribution of the first parameter to the second node.

The first node selectively sends, to the second node based on the uncertainty degree of the local model and an uncertainty degree of the parameter in the local model, all or some results obtained through local training, thereby reducing overheads of communication between the nodes and improving communication efficiency.

With reference to the first aspect, in some implementations of the first aspect, the prior distribution of the parameter in the federated model includes a plurality of local prior distributions, and the plurality of local prior distributions are in a one-to-one correspondence with a plurality of Bayesian models. That the first node performs training based on the prior distribution of the parameter in the federated model and local training data of the first node, to obtain a posterior distribution of a parameter in a local model of the first node includes: The first node determines a prior distribution of the parameter in the local model of the first node based on degrees of matching between the local training data and the plurality of local prior distributions. The first node performs training based on the prior distribution of the parameter in the local model and the local training data, to obtain the posterior distribution of the parameter in the local model.

Optionally, the plurality of local prior distributions may be hidden in the prior distribution of the parameter in the federated model. In other words, the prior distribution of the parameter in the federated model may be decomposed into a plurality of local prior distributions in a specific manner, for example, the prior distribution of the parameter in the federated model may be randomly sampled to decompose the prior distribution of the parameter in the federated model into a plurality of local prior distributions.

The second node maintains a relatively large federated model that includes a plurality of local prior distributions. The first node selects, from the plurality of local prior distributions, a local prior distribution matching the local training data to perform local training. In this way, a convergence speed in a local training process can be increased.

With reference to the first aspect, in some implementations of the first aspect, federated learning includes a plurality of rounds of iterations, and the posterior distribution of the parameter in the local model is a posterior distribution that is of the parameter in the local model and that is obtained through a current round of iteration. That the first node determines a prior distribution of the parameter in the local model of the first node based on degrees of matching between the local training data and the plurality of local prior distributions includes: The first node determines the prior distribution of the parameter in the local model of the first node based on differences between a historical posterior distribution and the plurality of local prior distributions, where the historical posterior distribution is a posterior distribution that is of the parameter in the local model and that is obtained by the first node before the current round of iteration.

With reference to the first aspect, in some implementations of the first aspect, the prior distribution of the parameter in the local model is a prior distribution in the plurality of local prior distributions that has a smallest difference from the historical posterior distribution; or the prior distribution of the parameter in the local model is a weighted sum of the plurality of local prior distributions, and weights respectively occupied by the plurality of local prior distributions in the weighted sum are determined by the differences between the historical posterior distribution and the plurality of local prior distributions.

With reference to the first aspect, in some implementations of the first aspect, the method further includes: The first node sends the posterior distribution of the parameter in the local model to the second node.

With reference to the first aspect, in some implementations of the first aspect, the machine learning model is a neural network.

With reference to the first aspect, in some implementations of the first aspect, the federated model is a Bayesian neural network.

With reference to the first aspect, in some implementations of the first aspect, the parameter in the federated model is a random variable.

With reference to the first aspect, in some implementations of the first aspect, the local model is a neural network.

With reference to the first aspect, in some implementations of the first aspect, the local model is a Bayesian neural network.

With reference to the first aspect, in some implementations of the first aspect, the parameter in the local model is a random variable.

With reference to the first aspect, in some implementations of the first aspect, the prior distribution of the parameter in the federated model is a probability distribution of the parameter in the federated model, or a probability distribution of the probability distribution of the parameter in the federated model.

With reference to the first aspect, in some implementations of the first aspect, the first node and the second node are respectively a client and a server in a network.

According to a second aspect, a federated learning method is provided, including: A second node receives a posterior distribution of a parameter in a local model of at least one first node. The second node updates a prior distribution of a parameter in a federated model based on the posterior distribution of the parameter in the local model of the at least one first node, where the federated model is a machine learning model whose parameter obeys a distribution.

Nodes exchange a prior distribution and a posterior distribution of a model parameter with each other, so that federated learning of a machine learning model whose parameter obeys a distribution is implemented. The machine learning model whose parameter obeys a distribution can give probabilities of various values of a parameter in advance, and the probabilities of the various values of the parameter can represent advantages and disadvantages of various possible improvement directions of the machine learning model. Therefore, performing federated learning on the machine learning model whose parameter obeys a distribution helps a node participating in federated learning to find a better improvement direction of the machine learning model, thereby reducing training time of federated learning and overheads of communication between the nodes.

With reference to the second aspect, in some implementations of the second aspect, before the second node receives the posterior distribution of the parameter in the local model of the at least one first node, the method further includes: The second node selects the at least one first node from a candidate node, where the federated learning includes a plurality of rounds of iterations, the at least one first node is a node participating in a current round of iteration, and the candidate node is a node participating in the federated learning before the current round of iteration. The second node sends the prior distribution of the parameter in the federated model to the at least one first node.

The second node selects, from the candidate node, a first node participating in a current round of training, so that a federated learning training process is more targeted and flexible.

With reference to the second aspect, in some implementations of the second aspect, that the second node selects the at least one first node from a candidate node includes: The second node selects the at least one first node from the candidate node based on evaluation information sent by the candidate node to the second node, where the evaluation information is used to indicate a degree of matching between the prior distribution of the parameter in the federated model and local training data of the candidate node, or the evaluation information is used to indicate a degree of matching between the local training data of the candidate node and a posterior distribution obtained by the candidate node through training based on the prior distribution of the parameter in the federated model, or the evaluation information is used to indicate a degree of matching between the prior distribution of the parameter in the federated model and the posterior distribution obtained by the candidate node through training based on the prior distribution of the parameter in the federated model.

Through the evaluation information fed back by the candidate node, the second node can accurately learn of a degree of matching between a local model (or the local training data) of the candidate node and the federated model, so that a first node participating in federated learning can be better selected based on an actual requirement.

With reference to the second aspect, in some implementations of the second aspect, that the second node selects the at least one first node from a candidate node includes: The second node selects the at least one first node from the candidate node based on a difference between a historical posterior distribution of the candidate node and the prior distribution of the parameter in the federated model, where the historical posterior distribution is a posterior distribution that is of the parameter in the local model and that is obtained by the candidate node before the current round of iteration.

The second node can calculate the difference between the historical posterior distribution of the candidate node and the prior distribution of the parameter in the federated model, to learn of a degree of matching between a local model (or local training data) of the candidate node and the federated model, so that a first node participating in federated learning can be better selected based on an actual requirement.

With reference to the second aspect, in some implementations of the second aspect, the local model includes no parameter whose uncertainty degree does not meet a preset condition.

The uncertainty degree of the parameter in the local model can well measure importance of the parameter to the local model. Nodes selectively exchange an important parameter with each other based on an uncertainty degree of a parameter, which can reduce overheads of communication between the nodes and improve communication efficiency.

With reference to the second aspect, in some implementations of the second aspect, the at least one first node includes a plurality of first nodes, and posterior distributions of parameters in local models of the plurality of first nodes each include a posterior distribution of a first parameter. That the second node updates a prior distribution of a parameter in a federated model based on the posterior distribution of the parameter in the local model of the at least one first node includes: If a difference between the posterior distributions of the first parameters of the plurality of first nodes is greater than a preset threshold, the second node updates the prior distribution of the parameter in the federated model to split the first parameters into a plurality of parameters.

With reference to the second aspect, in some implementations of the second aspect, the prior distribution of the parameter in the federated model includes a plurality of local prior distributions, and the plurality of local prior distributions are in a one-to-one correspondence with a plurality of Bayesian models.

The second node maintains a relatively large federated model that includes a plurality of local prior distributions, so that the first node can select a matched local prior distribution based on a condition of the first node, which helps increase a convergence speed in a local training process of the first node.

With reference to the second aspect, in some implementations of the second aspect, the machine learning model is a neural network.

With reference to the second aspect, in some implementations of the second aspect, the federated model is a Bayesian neural network.

With reference to the second aspect, in some implementations of the second aspect, the parameter in the federated model is a random variable.

With reference to the second aspect, in some implementations of the second aspect, the local model is a neural network.

With reference to the second aspect, in some implementations of the second aspect, the local model is a Bayesian neural network.

With reference to the second aspect, in some implementations of the second aspect, the parameter in the local model is a random variable.

With reference to the second aspect, in some implementations of the second aspect, the prior distribution of the parameter in the federated model is a probability distribution of the parameter in the federated model, or a probability distribution of the probability distribution of the parameter in the federated model.

With reference to the second aspect, in some implementations of the second aspect, the first node and the second node are respectively a client and a server in a network.

According to a third aspect, a federated learning method is provided, including: A first node receives a federated model from a second node, where the federated model includes a plurality of machine learning models (for example, a plurality of neural networks). The first node selects a target machine learning model from the plurality of machine learning models. The first node trains a local model of the first node based on the target machine learning model and local training data of the first node.

The second node maintains a plurality of machine learning models, and the first node can select a machine learning model from the plurality of machine learning models based on a condition of the first node, which helps shorten time consumed for local calculation of the first node, thereby improving local calculation efficiency.

With reference to the third aspect, in some implementations of the third aspect, that the first node selects a target machine learning model from the plurality of machine learning models includes: The first node selects the target machine learning model from the plurality of models based on degrees of matching between the local training data and the plurality of machine learning models.

The first node selects a machine learning model matching the local training data to perform local training, which can improve training efficiency of local training.

According to a fourth aspect, a federated learning method is provided, including: A second node sends a federated model to a first node, where the federated model includes a plurality of machine learning models (for example, a plurality of neural networks). The second node receives a local model that is sent by the first node and that corresponds to a target machine learning model in the plurality of machine learning models. The second node optimizes the target machine learning model based on the local model.

The second node maintains a plurality of machine learning models, and the first node can select a machine learning model from the plurality of machine learning models based on a condition of the first node, which helps shorten time consumed for local calculation of the first node, thereby improving local calculation efficiency.

According to a fifth aspect, a federated learning apparatus is provided, and the apparatus includes a module configured to perform the method according to any one of the first aspect to the fourth aspect.

According to a sixth aspect, a federated learning apparatus is provided, and the apparatus includes: a memory, configured to store a program; and a processor, configured to execute the program stored in the memory. When the program stored in the memory is executed, the processor is configured to perform the method according to any one of the first aspect to the fourth aspect.

According to a seventh aspect, a computer-readable medium is provided. The computer-readable medium stores program code used by a device for execution, and the program code is used to perform the method according to any one of the first aspect to the fourth aspect.

According to an eighth aspect, a computer program product including instructions is provided, and when the computer program product is run on a computer, the computer is enabled to perform the method according to any one of the first aspect to the fourth aspect.

According to a ninth aspect, a chip is provided. The chip includes a processor and a data interface, and the processor reads, through the data interface, instructions stored in a memory, to perform the method according to any one of the first aspect to the fourth aspect.

Optionally, in an implementation, the chip may further include the memory. The memory stores the instructions. The processor is configured to execute the instructions stored in the memory. When the instructions are executed, the processor is configured to perform the method according to the first aspect.

According to a tenth aspect, an electronic device is provided. The electronic device includes the federated learning apparatus according to any one of the fifth aspect and the sixth aspect.

## BRIEF DESCRIPTION OF DRAWINGS

FIG. 1 is an example diagram of an application scenario of federated learning;
FIG. 2 is a flowchart of federated learning;
FIG. 3 is a diagram of a hardware structure of a chip according to an embodiment of this application;
FIG. 4 is a schematic flowchart of a federated learning method according to an embodiment of this application;
FIG. 5 is a schematic flowchart of a possible implementation of step S420 in FIG. 4;
FIG. 6 is a schematic flowchart of a manner of selecting a first node participating in federated learning according to an embodiment of this application;
FIG. 7 is a schematic diagram of a structure of a federated learning apparatus according to an embodiment of this application;
FIG. 8 is a schematic diagram of a structure of a federated learning apparatus according to another embodiment of this application; and
FIG. 9 is a schematic diagram of a structure of a federated learning apparatus according to still another embodiment of this application.

## DESCRIPTION OF EMBODIMENTS

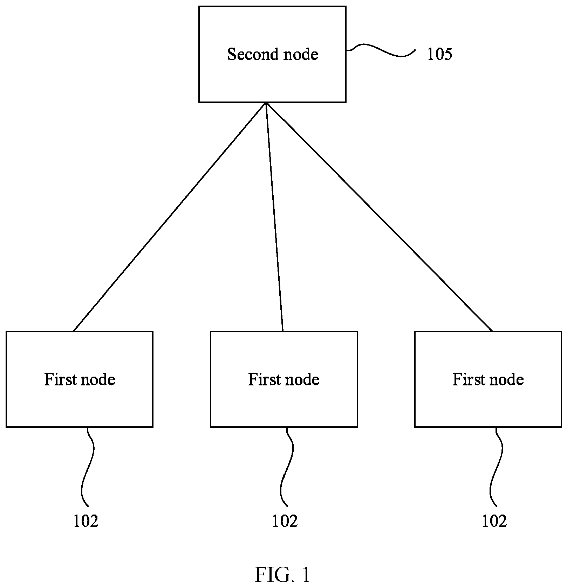

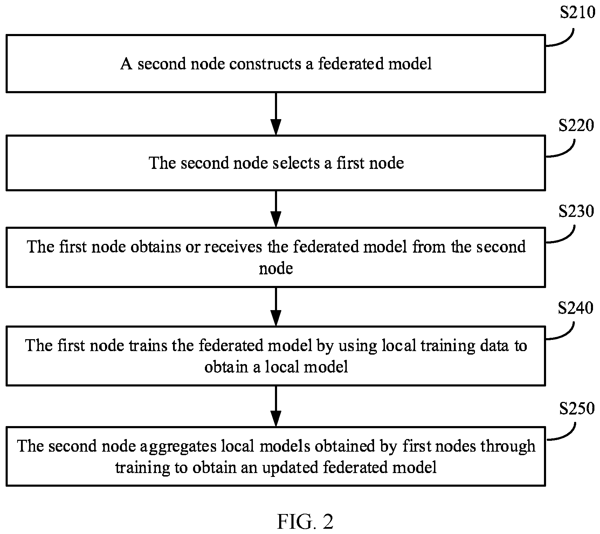

For ease of understanding, a scenario and a process of federated learning are first described by using examples with reference to FIG. 1 and FIG. 2.

Referring to FIG. 1, a scenario of federated learning may include a plurality of first nodes 102 and a second node 105. The first node 102 and the second node 105 may be any nodes (such as network nodes) that support data transmission. For example, the first node 102 may be a client, such as a mobile terminal or a personal computer. The second node 105 may be a server, or may be referred to as a parameter server. In some embodiments, the first node may be referred to as an owner of training data, and the second node may be referred to as a coordinator in a federated learning process.

The second node 105 may be configured to maintain a federated model. The first node 102 may obtain the federated model from the second node 105, and perform local training with reference to local training data to obtain a local model. After obtaining the local model through training, the first node 102 may send the local model to the second node 105, so that the second node 105 updates or optimizes the federated model. This is repeatedly performed, and a plurality of rounds of iterations are performed until the federated model converges or a preset iteration stop condition is reached.

A general process of federated learning is described below with reference to FIG. 2.

In step S210, the second node 105 constructs a federated model. The second node 105 may construct a general-purpose machine learning model, or may construct a specific machine learning model based on a requirement. Using an image recognition task as an example, the second node 105 may construct a convolutional neural network (convolutional neural network, CNN) as a federated model.

In step S220, the second node 105 selects a first node 102. The first node 102 selected by the second node 105 obtains the federated model delivered by the first node 102. The second node 105 may randomly select the first node 102, or may select the first node 102 based on a specific policy. For example, the second node 105 may select a first node 102 whose local model matches the federated model at a high degree, to increase a convergence speed of the federated model.

In step S230, the first node 102 obtains or receives the federated model from the second node 105. For example, in one implementation, the first node 102 may actively request the second node 105 to deliver the federated model. Alternatively, in another implementation, the second node 105 actively delivers the federated model to the first node 102. For example, the first node 102 is a client and the second node 105 is a server. In this case, the client may download the federated model from the server.

In step S240, the first node 102 trains the federated model by using local training data to obtain a local model. The first node 102 may use the federated model as an initial model of the local model, and then perform one or more steps of training on the initial model by using the local training data to obtain the local model.

A local training process may be considered as a process of optimizing a local model. An optimization objective of optimization may be represented by the following formula:

$$\min_{\omega} h_k(\omega; \omega^t) = F_k(\omega)$$

where $\omega$ represents a local model, $\omega^t$ represents a federated model in a $t^{th}$ round of iteration, $\omega$ may use $\omega^t$ as an initial value or may use a local model obtained in a previous round of iteration as an initial value, k represents a $k^{th}$ first node, and $F_k(\omega)$ represents a loss function for the local model in terms of local training data.

In step S250, the second node 105 aggregates local models obtained by the first nodes 102 through training to obtain an updated federated model. For example, in an implementation, the second node 105 may perform weighted summation on parameters in the local models of the plurality of first nodes 102, and use a result of the weighted summation as the updated federated model.

The process described in steps S220 to S250 may be considered as one round of iteration in the federated learning process. The second node 105 and the first node 102 may repeatedly perform the steps S220 to S250 until the federated model converges or a preset effect is achieved.

Federated learning may be used to train a machine learning model. A most common machine learning model is a neural network. For ease of understanding, related concepts of the neural network and some terms in the embodiments of this application are first explained.

(1) Neural network

The neural network may include a neuron. The neuron may be an operation unit that uses $x_s$ and an intercept of 1 as an input. An output of the operation unit may be as follows:

$$h_{W,b}(x) = f(W^T x) = f(\sum_{s=1}^{n} W_s x_s + b)$$

Herein, s=1, 2, ..., n, n is a natural number greater than 1, $W_s$ is a weight of $x_s$, and b is a bias of the neuron. f is an activation function (activation function) of the neuron, where the activation function is used to introduce a non-linear characteristic into the neural network, to convert an input signal in the neuron into an output signal. The output signal of the activation function may be used as an input of a next convolutional layer. The activation function may be a sigmoid function. The neural network is a network obtained by connecting a plurality of single neurons together. To be specific, an output of a neuron may be an input of another neuron. Input of each neuron may be connected to a local receptive field of a previous layer to extract a feature of the local receptive field. The local receptive field may be a region including several neurons.

(2) Deep neural network

The deep neural network (deep neural network, DNN) is also referred to as a multi-layer neural network, and may be understood as a neural network having many hidden layers. The "many" herein does not have a special measurement criterion. Based on locations of different layers in the DNN, a neural network in the DNN may be divided into three types: an input layer, a hidden layer, and an output layer. Generally, the first layer is the input layer, the last layer is the output layer, and the middle layer is the hidden layer. Layers are fully connected. To be specific, any neuron in an $i^{th}$ layer is necessarily connected to any neuron in an $(i + 1)^{th}$ layer. Although the DNN looks complex, working in each layer is not complex and is briefly the following linear relationship expression: $\vec{y} = \alpha(W\vec{x} + b)$, where $\vec{x}$ is an input vector, $\vec{y}$ is an output vector, b is an offset vector, W is a weight matrix (also referred to as a coefficient), and $\alpha(.)$ is an activation function. In each layer, only this simple operation is performed on the input vector $\vec{x}$ to obtain the output vector $\vec{y}$. Because there are many layers in the DNN, there are also many coefficients W and many offset vectors b. Definitions of these parameters in the DNN are as follows: The coefficient W is used as an example. It is assumed that in a DNN having three layers, a linear coefficient from the fourth neuron at the second layer to the second neuron at the third layer is defined as $W^3_{24}$ . The superscript 3 represents a layer at which the coefficient $W$ is located, and the subscript corresponds to an output third-layer index 2 and an input second-layer index 4. In conclusion, a coefficient of a $k^{th}$ neuron at an (L - 1)$^{th}$ layer to a $j^{th}$ neuron at an L$^{th}$ layer is defined as $W^L_{jk}$ . It should be noted that there is no parameter $W$ at the input layer. In the deep neural network, more hidden layers make the network more capable of describing a complex case in the real world. Theoretically, a model with more parameters has higher complexity and a larger "capacity". It indicates that the model can complete a more complex learning task. Training of the deep neural network is a process of learning a weight matrix, and a final objective of the training is to obtain a weight matrix of all layers of a trained deep neural network (a weight matrix formed by vectors $W$ of many layers).

(3) Loss function

In a process of training a deep neural network, because it is expected that an output of the deep neural network is as much as possible close to a predicted value that is actually expected, a predicted value of a current network and a target value that is actually expected may be compared, and then a weight vector of each layer of the neural network is updated based on a difference between the predicted value and the target value (certainly, there is usually an initialization process before the first update, to be specific, parameters are preconfigured for all layers of the deep neural network). For example, if the predicted value of the network is large, the weight vector is adjusted to decrease the predicted value, and adjustment is continuously performed, until the deep neural network can predict the target value that is actually expected or a value that is very close to the target value that is actually expected. Therefore, "how to obtain, through comparison, a difference between the predicted value and the target value" needs to be predefined. This is a loss function (loss function) or an objective function (objective function). The loss function and the objective function are important equations used to measure the difference between the predicted value and the target value. The loss function is used as an example. A higher output value (loss) of the loss function indicates a larger difference. Therefore, training of the deep neural network becomes a process of reducing the loss as much as possible.

(4) Neural network whose parameter obeys a distribution

The neural network whose parameter obeys a distribution is one of machine learning models whose parameter obeys a distribution. Specifically, a parameter in a conventional neural network (such as the weight of the neuron mentioned above) has a fixed value. However, this type of neural network has an overfilling problem, to be specific, this type of neural network usually gives over-confident prediction in a region in which there is a lack of training data, and uncertainty of a prediction result cannot be accurately measured.
Compared with a neural network whose parameter has a fixed value, parameters in some neural networks obey a specific distribution. For example, a parameter in a Bayesian neural network is a random variable that obeys a specific distribution, such as a random variable obeying a Gaussian distribution. A training process of a neural network whose parameters obey a probability distribution is not intended to obtain a fixed value of the parameter, but aims to optimize the probability distribution of the parameter. After training is completed, parameter distribution may be sampled, and each sampling value may correspond to a neural network whose parameter has a fixed value. If a large quantity of neural networks obtained through sampling have similar prediction on specific input, it may be considered that the corresponding prediction made by the neural network for the input has a relatively small uncertainty degree; or if a large quantity of neural networks obtained through sampling do not have similar prediction on specific input, the corresponding prediction made by the neural network for the input has a relatively large uncertainty degree. In this manner, a neural network whose parameters obey a probability distribution can represent uncertainty of prediction due to a lack of data, thereby avoiding overfilling.

(5) Prior distribution, posterior distribution, and likelihood estimation

Training of a machine learning model whose parameters obey a probability distribution may be considered as estimation of a probability distribution of a parameter based on a Bayesian formula. In the Bayesian formula, the prior distribution, the posterior distribution, and the likelihood estimation are three important concepts.
A prior distribution of a parameter is a pre-assumption of a posterior distribution, that is, the prior distribution of the parameter is an assumption of the posterior distribution of the parameter before training data is observed. The prior distribution of the parameter may be manually specified or may be obtained through data learning. In contrast, the posterior distribution of the parameter is description of distribution of the parameter after the training data is observed. In other words, the posterior distribution of the parameter is description of distribution of the parameter on a condition that the training data is known. Based on the Bayesian formula, the prior distribution, the posterior distribution, and the likelihood estimation of the parameter meet the following relationship: posterior distribution=(prior distribution×likelihood estimation)/probability of occurrence of training data.

(6) Parametric description and non-parametric description of parameter distribution

Regardless of a prior distribution or a posterior distribution of a parameter, the distribution is used to describe distribution of the parameter. However, there may be a plurality of manners of specifically describing parameter distribution. This is not limited in the embodiments of this application. In some embodiments, the prior distribution and/or the posterior distribution of the parameter may use a parametric distribution description manner. For example, assuming that parameter distribution is a Gaussian distribution, the prior distribution and/or the posterior distribution of the parameter may describe the Gaussian distribution by using a mean and a variance. In some other embodiments, the prior distribution and/or the posterior distribution may use a non-parametric distribution description manner. For example, the prior distribution and/or the posterior distribution of the parameter may describe parameter distribution in a manner such as a probability histogram, a probability density, a cumulative function curve, or the like.

(7) "Point description" and "Distribution description" of prior distribution for posterior distribution

A prior distribution of a model parameter may be a probability distribution of the model parameter, or may be a probability distribution of the probability distribution of the model parameter.
The prior distribution is associated with the posterior distribution, to be specific, the prior distribution may be considered as pre-description of the posterior distribution, that is, a hypothetical description before training data is observed. If the prior distribution of the model parameter is the probability distribution of the model parameter, the prior distribution of this type may be understood as the "point description" for the posterior distribution; or if the prior distribution of the model parameters is the probability distribution of the probability distribution of the model parameter, the prior distribution of this type may be understood as the "distribution description" for the posterior distribution.
For example, assuming that the model parameter obeys a Gaussian distribution, when the prior distribution of the model parameter is the probability distribution of the model parameter, the prior distribution of the model parameter may be a mean and a variance of the distribution of the model parameter. From a perspective of describing the posterior distribution by using the prior distribution, this is equivalent to that a point [mean, variance] in the prior distribution is used to perform the "point description" for the posterior distribution.
For another example, assuming that the model parameter obeys a Gaussian distribution, when the prior distribution of the model parameter is the probability distribution of the probability distribution of the model parameter, the prior distribution of the model parameter is not a mean and a variance of the given distribution of the model parameter, but describes a probability that the mean and the variance of the distribution of the model parameter have different values. From a perspective of describing the posterior distribution by using the prior distribution, this is equivalent to that the probability that the prior distribution uses the probability distribution to perform the "distribution description" on the probability that the mean and the variance of the posterior distribution have different values (or penalties or rewards with different values).

(8) Measurement of a difference between two distributions

Some embodiments of this application relate to measurement of a difference between a prior distribution and a posterior distribution. There may be a plurality of manners of measuring the difference between the prior distribution and the posterior distribution, and different distribution difference measurement functions may be designed based on different manners of describing the posterior distribution by using the prior distribution, to measure the difference between the two distributions. Several examples are given below.
For example, if the prior distribution uses a "point description" for the posterior distribution, and the prior distribution uses a parametric distribution description manner, the difference between the prior distribution and the posterior distribution may be measured by using KL divergence (Kullback-Leibler divergence) of the two distributions. In other words, the KL divergence of the prior distribution and the posterior distribution may be used as a function for measuring a distribution difference between the two distributions.
For another example, if the prior distribution uses a "point description", and the prior distribution uses a non-parametric distribution description manner (for example, the prior distribution is described based on a histogram, a probability density curve, or the like), the difference between the prior distribution and the posterior distribution may be measured by calculating similarity between histograms (or probability density curves) corresponding to the two distributions. In other words, the similarity between the histograms (or the probability density curves) corresponding to the prior distribution and the posterior distribution may be used as a function for measuring a distribution difference between the two distributions. The similarity between the histograms (or the probability density curves) corresponding to the two distributions may be obtained by calculating an area difference between the two histograms (or the probability density curves) or a cosine distance between the two histograms.

For still another example, if the prior distribution uses a "distribution description" for the posterior distribution, a probability that the prior distribution has a value in the posterior distribution may be used as description of the difference between the two distributions. In other words, the probability that the prior distribution has the value in the posterior distribution may be used as a function for measuring a distribution difference between the two distributions.

The following describes a hardware structure of a chip provided in embodiments of this application.

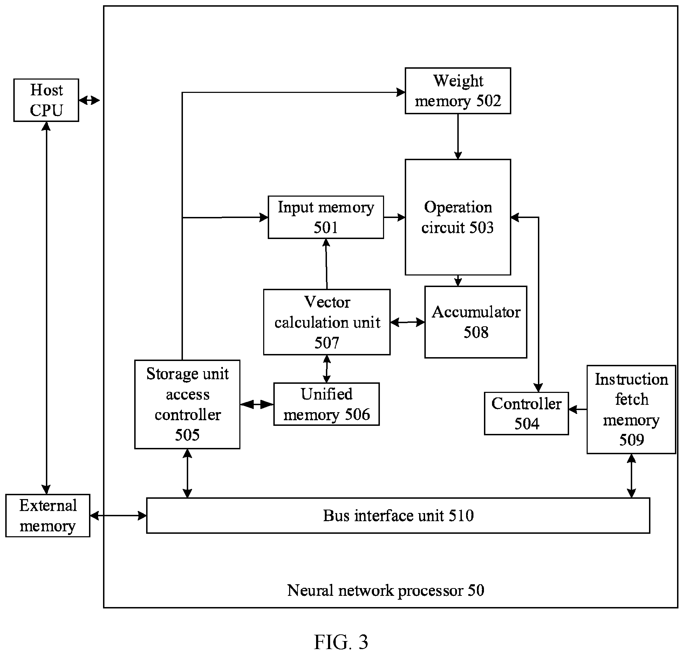

FIG. 3 shows a hardware structure of a chip according to an embodiment of this application. The chip includes a neural network processing unit 50. The chip may be disposed in the first node 102 shown in FIG. 1, and is used by the first node 102 to complete training of a local model. The chip may be disposed in the second node 105 shown in FIG. 1, and is used by the second node 105 to complete maintenance and update of a federated model.

The neural network processing unit 50 is mounted to a host central processing unit (host central processing unit, host CPU) as a coprocessor, and the main CPU allocates a task to the neural network processing unit 50. A core part of the neural network processing unit 50 is an operation circuit 503. A controller 504 controls the operation circuit 503 to extract data from a memory (a weight memory or an input memory) and perform an operation.

In some implementations, the operation circuit 503 internally includes a plurality of processing units (process engine, PE). In some implementations, the operation circuit 503 is a two-dimensional systolic array. Alternatively, the operation circuit 503 may be a one-dimensional systolic array or another electronic circuit that can perform mathematical operations such as multiplication and addition. In some implementations, the operation circuit 503 is a general-purpose matrix processor.

For example, it is assumed that there are an input matrix A, a weight matrix B, and an output matrix C. The operation circuit extracts corresponding data of the matrix B from the weight memory 502, and buffers the corresponding data into each PE in the operation circuit. The operation circuit obtains data of the matrix A from an input memory 501 to perform a matrix operation with that of the matrix B, and stores a partial result or a final result of an obtained matrix into an accumulator (accumulator) 508.

A vector calculation unit 507 may perform further processing on the output of the operation circuit, for example, vector multiplication, vector addition, an exponential operation, a logarithmic operation, and value comparison. For example, the vector calculation unit 507 may be configured to perform network calculation, for example, pooling (pooling), batch normalization (batch normalization), or local response normalization (local response normalization), in a non-convolution/non-FC layer in a neural network.

In some implementations, the vector calculation unit 507 can store a processed output vector in a unified buffer 506. For example, the vector calculation unit 507 may apply a non-linear function to the output, for example, a vector of an accumulated value, of the operation circuit 503 to generate an activation value. In some implementations, the vector calculation unit 507 generates a normalized value, a combined value, or both. In some implementations, the processed output vector can be used as an activation input to the operation circuit 503, for example, used in a subsequent layer in the neural network.

The unified memory 506 is configured to store input data and output data.

For weight data, a direct memory access controller 505 (direct memory access controller, DMAC) transfers input data in an external memory to the input memory 501 and/or the unified memory 506, stores, in the weight memory 502, weight data in the external memory, and stores, in the external memory, data in the unified memory 506.

A bus interface unit (bus interface unit, BIU) 510 is configured to implement interaction between the host CPU, the DMAC, and an instruction fetch buffer 509 by using a bus.

The instruction fetch buffer (instruction fetch buffer) 509 connected to the controller 504 is configured to store an instruction used by the controller 504.

The controller 504 is configured to invoke the instruction buffered in the instruction fetch buffer 509, to control a working process of the operation accelerator.

Generally, the unified memory 506, the input memory 501, the weight memory 502, and the instruction fetch buffer 509 are all on-chip (on-chip) memories. The external memory is a memory outside the neural network processing unit. The external memory may be a double data rate synchronous dynamic random access memory (double data rate synchronous dynamic random access memory, DDR SDRAM), a high bandwidth memory (high bandwidth memory, HBM), or another readable and writable memory.

Currently, existing federated learning can train only a machine learning model whose parameter (such as a weight) has a fixed value, but cannot train a machine learning model whose parameter obeys a distribution. Data distribution of local training data is often inconsistent with data distribution of whole training data (the whole training data refers to a data set including all local training data). Therefore, model concussion often occurs in a federated learning process of a machine learning model whose parameter has a fixed value (that is, in a training process, a value of a model parameter oscillates back and forth instead of continuously converging in a direction), resulting in long training time of the federated learning process and high communication overheads.

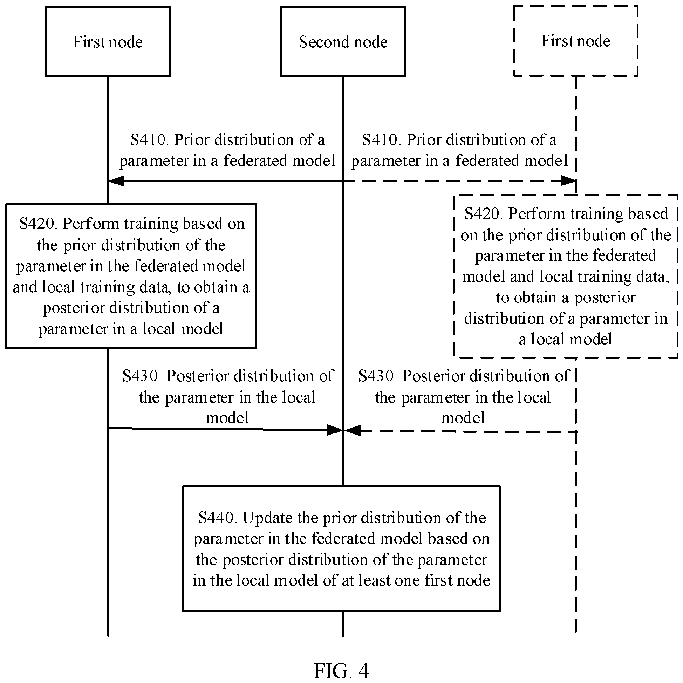

To resolve this problem, this application provides a federated learning method, to implement federated learning of a machine learning model whose parameter obeys a distribution. It should be understood that distribution mentioned in this application refers to a probability distribution. The federated learning method provided in the embodiments of this application is described below in detail with reference to FIG. 4.

The method in FIG. 4 includes steps S410 to S440. A first node in FIG. 4 may be any of the first nodes 102 in FIG. 1, and a second node in FIG. 4 may be the second node 105 in FIG. 1.

A federated model mentioned in the embodiment of FIG. 4 is a machine learning model whose parameter obeys a distribution. In some embodiments, the federated model is a neural network whose parameter obeys a distribution, and a parameter in the federated model may be a neuron parameter in the neural network. For example, the federated model may be a Bayesian neural network. Further, in some embodiments, a parameter in the Bayesian neural network may obey a Gaussian distribution.

A local model mentioned in the embodiment of FIG. 4 may also be a machine learning model whose parameter obeys a distribution. In some embodiments, the local model is a neural network whose parameter obeys a distribution, and a parameter in the local model may be a neuron parameter in the neural network. For example, the local model may be a Bayesian neural network. Further, in some embodiments, a parameter in the Bayesian neural network obeys a Gaussian distribution, a delta distribution, or another distribution. In some embodiments, the federated model and the local model may be machine learning models with a same structure. In some other embodiments, the federated model may include a plurality of Bayesian models (for example, a plurality of Bayesian neural networks), and the local model may have a same structure as one of the Bayesian models.

In step S410, the first node receives, from the second node, a prior distribution of a parameter in a federated model. For example, in one implementation, the first node may actively request the second node to deliver the prior distribution of the parameter in the federated model. Alternatively, in another implementation, the second node may actively deliver the prior distribution of the parameter in the federated model to the second node.

In step S420, the first node performs training based on the prior distribution of the parameter in the federated model and local training data of the first node, to obtain a posterior distribution of a parameter in a local model of the first node.

Alternatively, step S420 may be described as follows: The first node performs optimization based on the prior distribution of the parameter in the federated model and local training data of the first node, to obtain a posterior distribution of a parameter in a local model of the first node. In specific implementation, the posterior distribution of the parameter in the local model of the first node may be inferred based on the prior distribution of the parameter in the federated model through Bayesian optimization.

In step S430, the second node receives the posterior distribution of the parameter in the local model of at least one first node.

For example, in one implementation, the first node actively sends the posterior distribution of the parameter in the local model to the second node. Alternatively, in another implementation, the first node may send the posterior distribution of the parameter in the local model to the second node in response to a requirement of the second node.

The posterior distribution that is of the parameter in the local model and that is sent by the first node to the second node may be a posterior distribution of all parameters in the local model, or may be a posterior distribution of some parameters in the local model.

The first node may send the posterior distribution of the parameter in the local model to the second node in a manner of sending, to the second node, a difference between the posterior distribution of the parameter in the local model and the prior distribution of the parameter in the federated model. Alternatively, the first node may directly send the posterior distribution of the parameter in the local model to the second node.

The posterior distribution that is of the parameter in the local model and that is sent by the first node to the second node may be an encrypted posterior distribution of the parameter in the local model, or may be a posterior distribution that is of the parameter in the local model and that is not encrypted.

In addition, in some implementations, the first node may send the local training data to the second node.

In step S440, the second node updates the prior distribution of the parameter in the federated model based on the posterior distribution of the parameter in the local model of the at least one first node. For example, the second node may receive the posterior distribution that is of the parameter in the local model and that is sent by at the least one first node. Then, the second node may perform weighted summation on the posterior distribution of the parameter in the local model of the at least first node to obtain an updated prior distribution of the parameter in the federated model.

In a federated learning process, steps S410 to S440 may be performed once or may be repeatedly performed a plurality of times. For example, the steps S410 to S440 may be iteratively performed a plurality of times until an iteration stop condition is met. For example, the iteration stop condition may be that a preset quantity of iterations is reached, or may be that the federated model is converged.

In this embodiment of this application, nodes exchange a prior distribution and a posterior distribution of a model parameter with each other, so that federated learning of a machine learning model whose parameter obeys a distribution is implemented. The machine learning model whose parameter obeys a distribution can give probabilities of various values of a parameter in advance, and the probabilities of the various values of the parameter can represent advantages and disadvantages of various possible improvement directions of the machine learning model. Therefore, performing federated learning on the machine learning model whose parameter obeys a distribution helps a node participating in federated learning to find a better improvement direction of the machine learning model, thereby reducing training time and overheads of communication between the nodes.

In addition, data privacy still needs to be protected in a training process of the machine learning model whose parameter obeys a distribution. However, the conventional technology does not support federated learning of the machine learning model whose parameter obeys a distribution. For the machine learning model whose parameter obeys a distribution, training data of nodes needs to be aggregated at one end to be jointly trained in the conventional technology. In one aspect, user privacy is prone to be disclosed during training performed by using aggregated data, and in another aspect, a computing power requirement is relatively high for a node that aggregates data. According to the solution provided in this embodiment of this application, federated learning of the machine learning model whose parameter obeys a distribution can be implemented, thereby avoiding disclosure of user privacy and reducing a computing power requirement for a node that executes a training task.

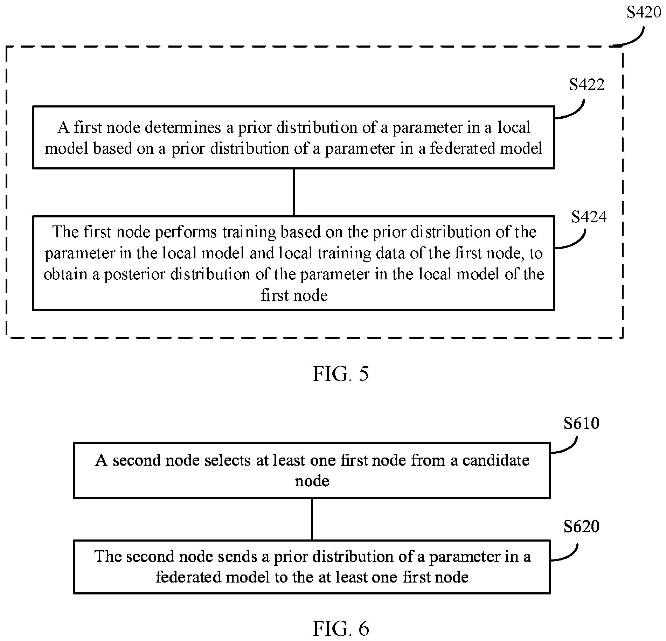

Step S420 in FIG. 4 may be implemented in a plurality of manners, and the implementation manner is described with reference to FIG. 5 by using an example.

As shown in FIG. 5, step S420 further includes step S422 and step S424. In step S422, the first node determines a prior distribution of the parameter in the local model based on the prior distribution of the parameter in the federated model. In step S424, the first node performs training based on the prior distribution of the parameter in the local model and the local training data of the first node, to obtain the posterior distribution of the parameter in the local model of the first node.

Step S422 is implemented in a plurality of manners. For example, if the federated model and the local model correspond to machine learning models with a same structure, the first node may directly use the prior distribution of the parameter in the federated model as the prior distribution of the parameter in the local model.

Alternatively, if the prior distribution of the parameter in the federated model can include a plurality of local prior distributions (each local prior distribution may correspond to a Bayesian model), after receiving the prior distribution of the parameter in the federated model, the first node may determine the prior distribution of the parameter in the local model based on degrees of matching between the local training data and the plurality of local prior distributions.

It should be noted that the plurality of local prior distributions may be explicitly included in the prior distribution of the parameter in the federated model. Alternatively, in some embodiments, the plurality of local prior distributions may be implied in the prior distribution of the parameter in the federated model and need to be decomposed from the prior distribution of the parameter in the federated model in a specific manner (such as random sampling). Several examples are given below.

For example, the federated model includes a plurality of Bayesian models with a same structure, and each parameter in each Bayesian model includes only one distribution. In addition, the prior distribution of the parameter in the federated model performs a "point description" for a posterior distribution. In this case, the plurality of Bayesian models may provide different prior distributions for one parameter, that is, one parameter may have a plurality of possible distributions. After receiving the prior distribution of the parameter in the federated model, the first node may perform sampling (such as random sampling) on the plurality of possible distributions of each parameter, and combine, in a plurality of manners, results of sampling on distributions of different parameters to form a plurality of local prior distributions. Then, the first node may select, from the plurality of local prior distributions based on the degrees of matching between the local training data of the first node and the plurality of local prior distributions, a local prior distribution most matching the local training data, and use the local prior distribution as the prior distribution of the parameter in the local model. Alternatively, the first node may obtain the prior distribution of the parameter in the local model through weighted summation based on a difference between the degrees of matching between the local training data and the plurality of local prior distributions.

For another example, the federated model includes only one machine learning model, but each parameter in the machine learning model includes a plurality of distributions (that is, a distribution of the parameter is a mixed distribution). In addition, the prior distribution of the parameter in the federated model performs a "point description" for a posterior distribution. In this case, each parameter in the machine learning model still has a plurality of possible distributions. After receiving the prior distribution of the parameter in the federated model, the first node may perform sampling (such as random sampling) on the plurality of possible distributions of each parameter, and combine, in a plurality of manners, results of sampling on distributions of different parameters to form a plurality of local prior distributions. Then, the first node may select, from the plurality of local prior distributions based on the degrees of matching between the local training data of the first node and the plurality of local prior distributions, a local prior distribution most matching the local training data, and use the local prior distribution as the prior distribution of the parameter in the local model.

Alternatively, the first node may obtain the prior distribution of the parameter in the local model through weighted summation based on a difference between the degrees of matching between the local training data and the plurality of local prior distributions.

For still another example, the federated model maintained by the second node may be a combination of the foregoing two cases, that is, the second node maintains a plurality of machine learning models, and one parameter in one of the machine learning models includes a plurality of distributions. In this case, a distribution value of each parameter has more possibilities, and richer selection ranges can be provided for sampling performed by the first node.

Using a Bayesian neural network whose parameters obey a Gaussian distribution as an example, it is assumed that the federated model maintained by the second node in one of the following cases.

Case 1: The federated model maintains only one Bayesian neural network, and each parameter in the Bayesian neural network includes only one Gaussian distribution.

Case 2: The federated model maintains a plurality of Bayesian neural networks, each parameter in each Bayesian neural network includes only one Gaussian distribution, and parameters in the plurality of Bayesian neural networks have different distributions.

Case 3: The federated model maintains only one Bayesian neural network, and each parameter includes a plurality of Gaussian distributions.

Case 4: The federated model maintains a plurality of Bayesian neural networks, each parameter in each Bayesian neural network includes a plurality of Gaussian distributions, and parameters in the plurality of Bayesian neural networks have different distributions.

In Case 2 to Case 4, after receiving the prior distribution of the parameter in the federated model, the first node may first perform sampling on the prior distribution to obtain a parameter in a Bayesian neural network, so that the parameter in the Bayesian neural network includes only one Gaussian distribution.

If the prior distribution of the parameter in the federated model uses a "distribution description" for the posterior distribution, a value of the prior distribution may be first sampled based on a probability of a distribution value given by the "distribution description", to obtain a plurality of values of the prior distribution. After the sampling operation is performed, it is equivalent to converting the "distribution description" of the prior distribution for the posterior distribution into a plurality of "point descriptions" of the prior distribution for the posterior distribution, where each "point description" is equivalent to a local prior distribution discomposed from the prior distribution of the parameter in the federated model. Then, the first node may select, from the plurality of local prior distributions based on the degrees of matching between the local training data of the first node and the plurality of local prior distributions, a local prior distribution matching the local training data, and use the local prior distribution as the prior distribution of the parameter in the local model. Alternatively, the first node may obtain the prior distribution of the parameter in the local model through weighted summation based on a difference between the degrees of matching between the local training data and the plurality of local prior distributions.

There may be a plurality of manners of measuring the degree of matching between the local prior distribution and the local training data of the first node.

For example, the local prior distributions may be sequentially used as prior distributions of the parameter in the local model, and are trained with reference to the local training data. Then, the degree of matching between each local prior distribution and the local training data of the first node is measured based on a training effect for the local prior distribution.

Alternatively, in some embodiments, the degree of matching between the local prior distribution and the local training data of the first node may be measured based on a difference between the local prior distribution and a historical posterior distribution of the parameter in the local model. Then, the prior distribution of the parameter in the local model may be determined based on differences between the historical posterior distribution and the plurality of local prior distributions. For example, a prior distribution in the plurality of local prior distributions that has a smallest difference from the historical posterior distribution may be used as the prior distribution of the parameter in the local model. Alternatively, weighted summation may be performed on the plurality of local prior distributions based on the differences between the historical posterior distribution and the plurality of local prior distribution, and a result of the weighted summation may be used as the prior distribution of the parameter in the local model.

The historical posterior distribution mentioned in this embodiment refers to a posterior distribution that is of the parameter in the local model and that is obtained by the first node before a current round of iteration, for example, a posterior distribution that is of the parameter in the local model and that is obtained in a previous round of iteration. A manner of measuring a difference between two distributions is described above, and is not described in detail herein again.

It should be noted that a solution in which the federated model maintains a plurality of machine learning models may also be applied to federated learning of a machine learning model whose parameter has a fixed value.

For example, the first node receives, from the second node, the federated model including a plurality of machine learning models. Then, the first node selects a target machine learning model from the plurality of machine learning models, and trains the local model of the first node based on the target machine learning model and the local training data of the first node. The target machine learning model may be a machine learning model in the plurality of machine learning models that matches the local training data at a highest degree, or the target machine learning model may be a machine learning model with highest precision in the plurality of machine learning models.

Correspondingly, the second node sends, to the first node, the federated model including the plurality of machine learning models. Then, the second node may receive a local model (that is, the local model is obtained by training the target machine learning model) that corresponds to the target machine learning model in the plurality of machine learning models and that is sent by the first node. The second node optimizes the target machine learning model based on the local model (that is, the second node optimizes the corresponding machine learning model in the federated model based on the local model).

Step S422 in FIG. 5 is described above in detail, and step S424 in FIG. 5 is described below in detail, that is, how to generate the posterior distribution of the parameter in the local model based on the prior distribution of the parameter in the local model is described in detail.

A process of generating the posterior distribution of the parameter in the local model based on the prior distribution of the parameter in the local model is a process of locally training the local model by using the local training data. In the local training process, the prior distribution of the parameter in the local model may be used in a plurality of manners. For example, the prior distribution of the parameter in the local model may be used as a constraint condition in an optimization objective of local training; or an initial value of the posterior distribution of the parameter in the local model may be determined based on the prior distribution of the parameter in the local model. A local training process corresponding to each of the two use manners is described below in detail.

Manner 1: The prior distribution of the parameter in the local model is used as the constraint condition in the optimization objective of local training.

First, the optimization objective of local training may be set as follows: A loss function for the posterior distribution of the parameter in the local model in terms of the local training data is as small as possible (or a likelihood function is as large as possible), and a function for measuring a distribution difference between the prior distribution and the posterior distribution of the parameter in the local model is as small as possible or a penalty for the distribution difference is as small as possible.

Then, before local training starts, an initial value may be first set for the posterior distribution of the parameter in the local model. The initial value may be set in a plurality of manners. For example, the initial value of the posterior distribution of the parameter in the local model may be set to a value of the posterior distribution of the parameter in the local model before a current round of iteration (for example, a previous round of iteration), or may be a randomized initial value. In some embodiments, the initial value of the posterior distribution of the parameter in the local model may be determined based on the prior distribution of the parameter in the local model. For example, if the prior distribution of the parameter in the local model uses a "point description" for the posterior distribution, the initial value of the posterior distribution of the parameter in the local model may be a value of the prior distribution of the parameter in the local model. For example, if the prior distribution of the parameter in the local model uses a "distribution description" for the posterior distribution, the initial value of the posterior distribution of the parameter in the local model may be a value sampled based on the prior distribution of the parameter in the local model.

Next, after the initial value of the posterior distribution of the parameter in the local model and the optimization objective are determined, local training may be performed by using a score function (score function) or through re-parameterization until the posterior distribution of the parameter in the local model converges.

Manner 2: The initial value of the posterior distribution of the parameter in the local model is determined based on the prior distribution of the parameter in the local model.

If the prior distribution of the parameter in the local model uses a "point description" for the posterior distribution, the prior distribution of the parameter in the local model may be used as the initial value of the posterior distribution of the parameter in the local model in the local training process. Alternatively, if the prior distribution of the parameter in the local model uses a "distribution description" for the posterior distribution, the initial value of the posterior distribution of the parameter in the local model may be a value sampled based on the prior distribution of the parameter in the local model.

The optimization objective of local training may be set as follows: During training of the local training data, a loss function for the posterior distribution of the parameter in the local model is as small as possible or a likelihood function is as large as possible.

Next, after the initial value of the posterior distribution of the parameter in the local model and the optimization objective of local training are determined, training may be performed by using a score function (score function) or through re-parameterization until the posterior distribution of the parameter in the local model converges.

How the first node performs local training by using the local training data is described above in detail with reference to FIG. 5. After local training ends, the first node may send, to the second node, the posterior distribution that is of the parameter in the local model and that is obtained through training, so that the second node updates the prior distribution of the parameter in the federated model based on the received posterior distribution of the parameter in the local model. However, in some embodiments, before feeding back a local training result to the second node, the first node may also decide, based on a specific condition, whether to feed back the local training result to the second node; and/or the first node may determine, based on a specific condition, whether to feed back all or some local training results to the second node. A decision manner of the first node is described below with reference to a specific embodiment by using an example.

Before sending the posterior distribution of the parameter in the local model to the second node, the first node may determine an uncertainty degree of the local model based on the posterior distribution of the parameter in the local model. When the uncertainty degree of the local model meets a first preset condition, the first node sends the posterior distribution of the parameter in the local model to the second node; or when the uncertainty degree of the local model does not meet the first preset condition, the first node does not send the posterior distribution of the parameter in the local model to the second node.

The uncertainty degree of the local model may be used to indicate stability of the local model. In some embodiments, the uncertainty degree of the local model may indicate importance of the local training data of the first node to the federated model (or importance to federated learning).

For example, when it is expected to converge the federated model as soon as possible, if the uncertainty degree of the local model is relatively high, it indicates that the local training data of the first node is unimportant to the federated model. When the prior distribution of the parameter in the federated model is optimized, if the posterior distribution of the local model is taken into consideration, a convergence speed of the federated model is reduced.

For another example, when it is expected to enlarge a capacity of the federated model, if the uncertainty degree of the local model is relatively high, it indicates that the local training data of the first node is important to the federated model. When the prior distribution of the parameter in the federated model is optimized, if the posterior distribution of the parameter in the local model is taken into consideration, reliability of inferring, by the federated model, data the same as or close to the local training data is improved.

The uncertainty degree of the local model may be measured based on at least one piece of the following information: a variance of the posterior distribution of the parameter in the local model, a convergence speed (or referred to as a convergence effect) of the posterior distribution of the parameter in the local model, or inferential accuracy of the posterior distribution of the parameter in the local model.

Specific content of the first preset condition is not limited in this embodiment of this application, and may be selected based on an actual requirement.

In one example, if it is expected to increase the convergence speed of the federated model, the first node may not send the posterior distribution of the parameter in the local model to the second node when the uncertainty degree of the local model is relatively high. For example, when a variance of the local model is greater than a preset threshold or a convergence efficiency speed of the local model is less than a preset threshold, the first node does not send the posterior distribution of the parameter in the local model to the second node.

In another example, if it is expected to enlarge the capacity of the federated model, the first node sends the posterior distribution of the parameter in the local model to the second node when the uncertainty degree of the local model is relatively high. For example, when a variance of the local model is greater than a preset threshold or a convergence efficiency speed of the local model is less than a preset threshold, the first node sends the posterior distribution of the parameter in the local model to the second node.

Before sending the posterior distribution of the parameter in the local model to the second node, the first node may further choose, based on a difference between the posterior distribution of the parameter in the local model and the prior distribution of the parameter in the local model, whether to send the posterior distribution of the parameter in the local model to the second node.

For example, if it is expected to improve efficiency of communication between nodes, the first node may not send the posterior distribution of the parameter in the local model to the second node when the difference between the posterior distribution of the parameter in the local model and the prior distribution of the parameter in the local model is relatively small (for example, less than a preset threshold). This is because when the difference between the posterior distribution of the parameter in the local model and the prior distribution of the parameter in the local model is relatively small, it indicates that a difference between the local model and the federated model is relatively small, and even if the posterior distribution of the parameter in the local model is sent to the second node, there is no significant effect on update of the prior distribution of the parameter in the federated model. In this case, the first node does not upload the posterior distribution of the parameter in the local model, so that a bandwidth between the nodes can be saved, and efficiency of communication between the nodes can be improved.

How the first node decides whether to send the local training result to the second node is described above in detail How the first node decides whether to send some of local training results to the second node is described below in detail It should be noted that the two decisions may be independent of each other or may be combined with each other. For example, after determining to feed back the local training result to the second node, the first node may determine a specific result that is in the local training result and that is to be fed back to the second node.

Optionally, in some embodiments, the first node may determine an uncertainty degree of a first parameter in the local model based on a posterior distribution of the first parameter, where the local model may include at least one parameter, and the first parameter is any of the at least one parameter. When the uncertainty degree of the first parameter meets a second preset condition, the first node sends the posterior distribution of the first parameter to the second node.

The uncertainty degree of the first parameter may be used to indicate importance of the first parameter to the local model of the first node. If the uncertainty degree of the first parameter is relatively high (for example, distribution of the first parameter is relatively flat), the parameter usually has little effect on a final prediction or inference result of the local model. In this case, the first node may consider skipping sending the posterior distribution of the first parameter to the second node.

The uncertainty degree of the first parameter mentioned above may be measured in a plurality of manners. For example, the uncertainty degree of the first parameter may be measured based on a mean or a variance of the posterior distribution of the first parameter, or a combination thereof. For example, the first node may compare the variance of the first parameter with a fixed threshold. When the variance is less than the fixed threshold, the first node sends the posterior distribution of the first parameter to the second node; or when the variance is greater than or equal to the fixed threshold, the first node does not send the posterior distribution of the first parameter to the second node. For another example, the first node may first generate a random number based on the variance of the first parameter, and then compare the random number with a fixed threshold. When the random number is less than the fixed threshold, the first node sends the posterior distribution of the first parameter to the second node; or when the random number is greater than or equal to the fixed threshold, the first node does not send the posterior distribution of the first parameter to the second node.

Specific content of the second preset condition mentioned above is not limited in this embodiment of this application, and may be selected based on an actual requirement. For example, the second preset condition may be set based on the uncertainty degree of the first parameter, or may be set based on an order of the uncertainty degree of the first parameter in uncertainty degrees of all parameters in the local model.

It should be understood that the first parameter mentioned above is any parameter in the local model, and the first node may process some or all parameters in the local model in a manner similar to the manner of processing the first parameter. If the first node processes all the parameters in the local model in a manner similar to the manner of processing the first parameter, the first node may find, in the local model, all parameters whose parameter uncertainty degrees do not meet the second preset condition, and does not feed back posterior distributions of these parameters to the second node when feeding back the local training result to the second node.

The first node may also send the posterior distribution of the parameter in the local model to the second node in a plurality of manners. For example, the first node may send an overall distribution of the parameter in the local model to the second node, or may send one or more sampling values of the overall distribution of the parameter in the local model to the second node. When the first node sends one or more sampling values of the overall distribution of the parameter in the local model to the second node, the second node may estimate, based on a plurality of received sampling values of an overall distribution of a same parameter, an overall distribution of the parameter, and update an estimation result as a prior distribution of the parameter to the federated model. The first node sends a sampling value of an overall distribution to the second node, so that efficiency of communication between the nodes can be improved and a communication bandwidth can be reduced.

Before step S410 in FIG. 4 is performed, the second node may perform a step shown in FIG. 6. To be specific, the second node may select one or more first nodes from a candidate node according to a specific rule, and send the prior distribution of the parameter in the federated model to the selected first node, without sending the prior distribution of the parameter in the federated model to an unselected node. Federated learning usually includes a plurality of rounds of iterations, and at least one first node in FIG. 4 may be a node participating in a current round of iteration, and the candidate node mentioned above may be a node participating in the federated learning before the current round of iteration, for example, may be a node participating in a previous round of iteration in the federated learning. The second node may select a same first node or different first nodes in different rounds of iterations.

Step S610 may be implemented in a plurality of manners, and several possible implementations are given below. For example, in some embodiments, the second node may randomly select a first node participating in the current round of iteration.

Alternatively, in some embodiments, the second node may select, based on evaluation information fed back by the candidate node, a first node participating in the current round of iteration. The evaluation information may be used to indicate a degree of matching between the prior distribution of the parameter in the federated model and local training data of the candidate node, or the evaluation information may be used to indicate a degree of matching between the local training data of the candidate node and a posterior distribution obtained by the candidate node through training based on the prior distribution of the parameter in the federated model, or the evaluation information may be used to indicate a degree of matching between the prior distribution of the parameter in the federated model and the posterior distribution obtained by the candidate node through training based on the prior distribution of the parameter in the federated model. A degree of matching between the local training data and the prior distribution or the posterior distribution may be evaluated by using a value of a loss function obtained when the local model performs local testing.

If it is expected to enlarge a capacity of the federated model, the second node may select a candidate node with a relatively low matching degree to participate in federated learning. If it is expected to increase a convergence speed of the federated model, the second node may select a candidate node with a relatively high matching degree to participate in federated learning.

Alternatively, in some embodiments, the second node may select at least one first node from the candidate node based on a difference between a historical posterior distribution of the candidate node and the prior distribution of the parameter in the federated model.

If it is expected to enlarge a capacity of the federated model, the second node may select a candidate node with a relatively large difference to participate in federated learning. If it is expected to increase a convergence speed of the federated model, the second node may select a candidate node with a relatively small difference to participate in federated learning.

Referring to FIG. 4 again, Step S440 in FIG. 4 describes a process in which the second node updates the prior distribution of the parameter in the federated model. The updating process may also be understood as a process in which the second node optimizes the prior distribution of the parameter in the federated model or a process of calculating an optimal solution of the prior distribution of the parameter in the federated model. The process of updating the parameter in the federated model is described below in detail with reference to a specific embodiment.

If the prior distribution of the parameter in the federated model uses a parametric "point description" for the posterior distribution, for a same parameter in the updating process, the second node may calculate a prior distribution of the parameter by using a difference between posterior distributions of the parameter, so that an average value (or a weighted average value) of differences between the prior distribution of the parameter and the posterior distributions of the parameter is smallest.

If the prior distribution of the parameter in the federated model uses a non-parametric "point description" (such as a histogram or a probability density curve) for the posterior distribution, the second node may combine histograms or probability density curves of a same parameter to obtain a prior distribution of the parameter.

If the prior distribution of the parameter in the federated model uses a "distribution description" for the posterior distribution, the second node may estimate, based on different posterior distributions of a same parameter, a probability distribution of the posterior distributions of the parameter, and use the probability distribution of the posterior distributions of the parameter as a prior distribution of the parameter.

If the prior distribution of the parameter in the federated model of the second node includes a plurality of local prior distributions or may be split to obtain a plurality of local prior distributions, and a local training process of a specific first node is based on only one of the local prior distributions, a posterior distribution of a parameter in a local model of the first node may be only used to update a local prior distribution corresponding to the posterior distribution.

Optionally, in the updating process, a structure of the federated model may be further adjusted.

For example, assuming that a current distribution of a parameter in the federated model is formed by superimposing a relatively large quantity of distributions, superimposition of the current distribution of the parameter may be approximated by superimposition of a relatively small quantity of distributions to simplify the federated model. Specifically, a component reduction (component reduction) technology may be used to approximate superposition of a relatively large quantity of distributions by superposition of a relatively small quantity of distributions.

Alternatively, assuming that posterior distributions that are of parameters in local models of a plurality of first nodes and that are received by the second node each include a posterior distribution of a first parameter, and a difference between the posterior distributions of the first parameters of the plurality of first nodes is greater than a preset threshold, the second node may update the prior distribution of the parameter in the federated model to split the first parameters into a plurality of parameters. In this embodiment of this application, the technology is referred to as a model splitting technology.

Alternatively, when the second node maintains a plurality of machine learning models, the second node may combine machine learning models with a relatively small difference, or may generate a new machine learning model from the existing machine learning models (for example, randomly generating a new model).

In a start phase of federated learning, the second node may further first initialize the federated model. Initialized content is not specifically limited in this embodiment of this application. For example, the second node may set a network structure of the federated model. For another example, the second node may set an initial value for the prior distribution of the parameter in the federated model. For another example, the second node may set a hyperparameter in a federated learning process.

The following describes this embodiment of this application in more detail with reference to specific examples. It should be noted that the following examples are merely intended to help a person skilled in the art understand embodiments of this application, instead of limiting embodiments of this application to a specific value or a specific scenario shown in the examples. A person skilled in the art clearly can make various equivalent modifications or changes based on the provided examples, and such modifications or changes also fall within the scope of embodiments of this application.

**Example 1:**

1.1 Introduction to an application scenario

A federated model maintained by the second node is a single neural network, and a prior distribution of a parameter in the federated model performs a "distribution description" for a posterior distribution. In a local training process, the first node directly uses the prior distribution of the parameter in the federated model as the prior distribution of the parameter in the local model to perform local training. The prior distribution and the posterior distribution of the parameter in the local model correspond to neural networks of a same size. In the local training process, the first node performs Bayesian optimization by using a Gaussian distribution as a likelihood function.

For example, the prior distribution of the parameter in the federated model maintained by the second node performs the "distribution description" for the posterior distribution by using a Gaussian inverse gamma distribution, and the posterior distribution is the Gaussian distribution. The Gaussian inverse gamma distribution may also be referred to as a normal inverse gamma (normal inverse gamma) distribution, which may be represented by using the following formula (1):

$$ \text{N-}\Gamma^{-1}(\mu,\sigma^2 \,|\, \mu_0,v,\alpha,\beta) \qquad (1) $$

In formula (1), $\text{N-}\Gamma^{-1}$ represents the Gaussian inverse gamma distribution, and $\mu_0,v,\alpha,\beta$ are four parameters in the Gaussian inverse gamma distribution. The four parameters determine distribution of a mean $\mu$ and a variance $\sigma^2$ of the posterior distribution (Gaussian distribution).

A probability that local training data is generated by the federated model may be represented by using formula (2):

$$ p(D \,|\, \mu_0,v_0,\alpha,\beta) = \prod_{k=1}^{K} \int p(D_k \,|\, \theta_k) \text{N}(\theta_k \,|\, \mu_k,\sigma_k^2) \text{N-}\Gamma^{-1}(\mu_k,\sigma_k^2 \,|\, \mu_0,v,\alpha,\beta) d\mu_k d\sigma_k^2 d\theta_k \qquad (2) $$

In formula (2), K represents a quantity of first nodes participating in federated learning, and k represents a $k^{th}$ first node in the K first nodes. $D$ represents a complete data set including local training data of the K first nodes, and $D_k$ represents a data set including local training data of the $k^{th}$ first node. $\theta_k$ represents a parameter in a local model of the $k^{th}$ first node, and $p(D_k|\theta_k)$ represents a probability that the data set $D_k$ occurs when the parameter $\theta_k$ is given. N (.) represents the Gaussian distribution, and $\text{N}(\theta_k \,|\, \mu_k,\sigma_k^2)$ indicates that the mean $\mu_k$ and the variance $\sigma_k^2$ of the Gaussian distribution determines distribution of $\theta_k$.

Further, in formula (2), $\int p(D_k \,|\, \theta_k) \text{N}(\theta_k \,|\, \mu_k,\sigma_k^2) \text{N-}\Gamma^{-1}(\mu_k,\sigma_k^2 \,|\, \mu_0,v,\alpha,\beta) d\mu_k d\sigma_k^2 d\theta_k$ represents a probability that the data set $D_k$ of the $k^{th}$ first node occurs when the parameters $\mu_0,v_0,\alpha,\beta$ are given. Because it is assumed in advance that the first nodes are independent of each other, a probability that the data set D occurs when the parameters $\mu_0,v_0,\alpha,\beta$ are given is multiplying of probabilities of occurrence of the data sets

12. Local training process

The local training process may actually be an optimization process. An optimization objective may be defined by using formula (3):

$$ \int \text{N}(\theta_k \,|\, \hat{\mu}_k,\hat{\sigma}_k^2) \log p(D_k \,|\, \theta_k) d\theta_k + \log \text{N-}\Gamma^{-1}(\hat{\mu}_k,\hat{\sigma}_k^2 \,|\, \mu_0,v,\alpha,\beta) \qquad (3) $$

The optimization objective means finding optimal model parameters $\hat{\mu}_k, \hat{\sigma}_k^2$ on a condition that $\mu_0,v,\alpha,\beta$ in the prior distribution of the parameter in the local model are given, so that formula (3) has a largest value. The optimal

model parameters $\hat{\mu}_{k}$, $\hat{\sigma}_{k}^{2}$ obtained through optimization may be used as the posterior distribution of the parameter in the local model. $\int \mathrm{N}(\theta_{k}|\hat{\mu}_{k},\hat{\sigma}_{k}^{2})\log p(D_{k}|\theta_{k})d\theta_{k}$ in formula (3) represents a probability that the data set $D_{k}$

including the local training data occurs on a condition that the model parameters $\hat{\mu}_{k}$, $\hat{\sigma}_{k}^{2}$ are given, and $\hat{\mu}_{k}$, $\hat{\sigma}_{k}^{2}$ are

optimized to enable the probability to be as large as possible. $\log \mathrm{N}\text{-}\Gamma^{-1}(\hat{\mu}_{k},\hat{\sigma}_{k}^{2}|\mu_{0},v,\alpha,\beta)$ in formula (3) represents

a probability that $\hat{\mu}_{k}$, $\hat{\sigma}_{k}^{2}$ occur on a condition that the parameters $\mu_0,v,\alpha,\beta$ are given. The optimization objective is expecting the probability of occurrence of $\hat{\mu}_{k}$, $\hat{\sigma}_{k}^{2}$ to be as large as possible. $\log \mathrm{N}\text{-}\Gamma^{-1}(\hat{\mu}_{k},\hat{\sigma}_{k}^{2}|\mu_{0},v,\alpha,\beta)$ may

be understood as a regular entry of $\int \mathrm{N}(\theta_{k}|\hat{\mu}_{k},\hat{\sigma}_{k}^{2})\log p(D_{k}|\theta_{k})d\theta_{k}$, and the regular entry enables a difference

between $\hat{\mu}_{k}$, $\hat{\sigma}_{k}^{2}$ in the posterior distribution of the parameter in the local model and those in the prior distribution of the parameter in the local model to be as small as possible, so that the posterior distribution of the parameter in the local model does not deviate from the prior distribution of the parameter in the federated model too much, that is, it is ensured that a federated learning process is a continuous learning process, and model concussion does not occur.

After the optimization objective is defined, optimization may be performed through re-parameterization to obtain the posterior distribution of the parameter in the local model, that is, obtain $\hat{\mu}_{k}$, $\hat{\sigma}_{k}^{2}$.

1.3. Process of updating (or optimizing) the prior distribution of the parameter in the federated model

After the first node participating in federated learning sends the posterior distribution of the parameter in the local model to the second node, the second node may update the prior distribution of the parameter in the federated model according to formula (4):

$$\log \mathrm{N}\text{-}\Gamma^{-1}(\hat{\mu}_{k},\hat{\sigma}_{k}^{2}|\mu_{0},v,\alpha,\beta) \tag{4}$$

For example, the second node may maximize formula (4) to obtain an optimal solution of the prior distribution of the parameter in the federated model, that is, optimal solutions of $\mu_0,v,\alpha,\beta$.

**Example 2:**

2.1 Introduction to an application scenario

A federated model maintained by the second node is a single neural network (such as a Bayesian neural network). One parameter in the federated model has a plurality of distributions (such as a mixed Gaussian distribution), and a prior distribution of a parameter in the federated model performs a "point description" for a posterior distribution. In a local training process, the first node directly uses the prior distribution of the parameter in the federated model as the prior distribution of the parameter in the local model to perform local training. The prior distribution and the posterior distribution of the parameter in the local model correspond to neural networks of a same size. In the local training process, the first node performs Bayesian optimization by using a Gaussian distribution as a likelihood function.

2.2 Initialization process

The second node initializes a neural network as the federated model. $P(\theta|\eta)$ represents the prior distribution of the parameter in the federated model, where $\theta$ represents a model parameter, and $\eta$ represents a prior value that describes distribution of $\theta$. For example, one parameter includes two Gaussian distributions. In this case, $\eta=$[mean 1,

variance 1, mean 2, and variance 2].

2.3. Local training process

First, a first node selected by the second node obtains, from the second node, the prior distribution P(θ|η) of the parameter in the federated model.

Then, the first node uses P(θ|η) as a prior distribution of a parameter in a local model to perform training by using the local training data, to obtain a posterior distribution of the parameter in the local model.

Specifically, a training process of the posterior distribution of the parameter in the local model is an optimization process. An optimization objective may be defined by using formula (5):

$$\max_{q_k} E_{q_k} \{\log p(D_k|\theta) - D_{KL}[q_k(\theta)\|p(\theta|\eta)]\} \tag{5}$$

In formula (5), $q_k(\theta)$ represents a posterior distribution of a parameter $\theta$ in the local model. If a parametric description manner (rather than a non-parametric description manner such as a histogram or a probability density curve) is used for the posterior distribution of the parameter in the local model, the posterior distribution of the parameter in the local model may also be represented by $q_k(\theta|\eta_k)$, that is, the parameter $\theta$ in the local model is described by using the parameter $\eta_k$. $\log p(D_k|\theta)$ represents a likelihood function corresponding to the parameter $\theta$ in the local model, and $D_{KL}$ represents KL divergence.

After the optimization objective is defined, $q_k(\theta)$ is optimized through re-parameterization to obtain optimized $q_k(\theta)$.

2.4. Process of updating (or optimizing) the prior distribution of the parameter in the federated model

After the first node participating in federated learning sends the posterior distribution of the parameter in the local model to the second node, the second node may update the prior distribution of the parameter in the federated model according to formula (6):

$$\max_{P} : -\sum_{k=1}^{K} D_{KL}[q_k(\theta)\|p(\theta|\eta)] + \log P(\eta) \tag{6}$$

$P(\eta)$ in formula (6) represents distribution of η, and the distribution may be manually set in advance.

**Example 3:**

3.1 Introduction to an application scenario

A federated model maintained by the second node includes a plurality of neural networks. The local model of the first node is a single neural network.

3.2 Initialization process

The second node initializes a prior distribution of a parameter in the federated model. The prior distribution of the parameter in the federated model includes N local prior distributions (N is an integer greater than 1). The N local prior distributions are in a one-to-one correspondence with N neural networks. In other words, the N local prior distributions are respectively prior distributions of parameters in the N neural networks. Structures of the N neural networks may be the same or different. For example, a first neural network $M_1^g(0)$ in the N neural networks has five fully connected layers, and 50 neurons are disposed in each layer. A second neural network $M_2^g(0)$ is also a neural network having five fully connected layers, and 50 neurons are disposed in each layer. A third neural network $M_3^g(0)$ has four fully connected layers, and 40 neurons are disposed in each layer. A fourth neural network $M_4^g(0)$ has four convolutional layers and one fully connected layer.

Then, the second node may send the N local prior distributions to a plurality of first nodes. The second node may send different local prior distributions to different first nodes. For example, the second node may send, to first nodes 1, 2, and 3, a local prior distribution corresponding to the first neural network; send, to first nodes 4, 5, and 6, a local prior distribution corresponding to the second neural network; send, to first nodes 7, 8, and 9, a local prior distribution corresponding to the third neural network; and send, to first nodes 9, 10, 11, a local prior distribution corresponding to the fourth neural network. Certainly, to protect privacy of data, the second node may alternatively send a same local prior distribution to different first nodes.

A first node that receives a local prior distribution corresponding to an $i^{th}$ neural network may use the local prior distribution corresponding to the $i^{th}$ neural network as an initial value of a prior distribution of a parameter in a local model, that is, $M_i^{\ln}(0) = M_i^g(0)$, and then perform training one or more times by using local training data, to obtain a posterior distribution of the parameter in the local model. The first node may use formula (7) as a loss function in a local training process.

$$P_i^g(\theta|\eta) \tag{7}$$

The first node sends, to the second node, the posterior distribution of the parameter in the local model obtained through training. The second node updates the prior distribution of the parameter in the federated model according to formula (8) through weighted averaging:

$$M_i^g(1) = \frac{1}{Ni} \sum_{n=1}^{Ni} \alpha_i^n M_i^{\ln}(t) \tag{8}$$

In formula (8), Ni represents a quantity of posterior distributions that are of the parameter in the local model and that are obtained after local training is performed based on the local prior distribution corresponding to the $i^{th}$ neural network, and $\alpha_i^n$ represents a weight of an $n^{th}$ posterior distribution of the parameter in the local model in the Ni posterior distributions of the parameter in the local model, where the weight may be determined based on a proportion of a data amount of local training data in the $n^{th}$ posterior distribution of the parameter in the local model to a total data amount of local training data in the Ni posterior distributions of the parameter in the local model.

3.3. Local training process

A first node selected by the second node may obtain, from the second node, the prior distribution $M_i^g(k)$ of the parameter in the federated model, where i=1, 2, ..., and N. Then, the first node may use local training data to test a degree of matching between the local training data and each local prior distribution in the prior distribution of the parameter in the federated model, and select a local prior distribution $M_{i*}^g(k)$ with a highest matching degree from the local prior distributions.

After determining the local prior distribution $M_{i*}^g(k)$ that best matches the local training data, the first node may use the local prior distribution $M_{i*}^g(k)$ as an initial value of a prior distribution of a parameter in the local model, that is, $M_{i*}^{\ln}(0) = M_{i*}^g(k)$. Then, the first node may perform training one or more times by using the local training data to obtain a posterior distribution of the parameter in the local model. $Loss = f(D_{i*}^n; M_{i*}^{\ln}(t))$ may be used as a loss function in the training process, where $D_{i*}^n$ represent local training data of an $(i*)^{th}$ first node.

Alternatively, the first node may add the local prior distribution $M_{i*}^g(k)$ to a regular entry of the loss function in the local training process: $$Loss = f(D_{i*}^n; M_{i*}^{\ln}(t)) + \left| M_{i*}^{\ln}(t) - M_{i*}^g(k) \right|$$ , and then perform training based on the loss function by using the local training data to obtain the posterior distribution of the parameter in the local model.

3.4. Process of updating (or optimizing) the prior distribution of the parameter in the federated model

After the first node participating in federated learning sends the posterior distribution of the parameter in the local model to the second node, the second node may update a prior distribution of a parameter in each neural network in the federated model according to formula (9):

$$M_i^g(k+1) = \frac{1}{Ni} \sum_{n=1}^{Ni} \alpha_i^n M_i^{\ln}(t) \tag{9}$$

In formula (9), Ni represents a quantity of posterior distributions that are of the parameter in the local model and that are obtained after local training is performed based on the local prior distribution corresponding to the $i^{th}$ neural network, and $\alpha_i^n$ represents a weight of an $n^{th}$ posterior distribution of the parameter in the local model in the Ni posterior distributions of the parameter in the local model, where the weight may be determined based on a proportion of a data amount of local training data in the $n^{th}$ posterior distribution of the parameter in the local model to a total data amount of local training data in the Ni posterior distributions of the parameter in the local model.

**Example 4:**

4.1 Introduction to an application scenario

A federated model maintained by the second node includes a plurality of neural networks (such as a plurality of Bayesian neural networks), and a parameter in each neural network is described by using a Gaussian distribution.
A prior distribution of a parameter in the federated model includes a plurality of local prior distributions in a one-to-one correspondence with the plurality of neural networks, and each local prior distribution performs a "point description" for a posterior distribution.
In a local training process, the first node performs local training by using a specific local prior distribution in the prior distribution of the parameter in the federated model as the prior distribution of the parameter in the local model. For example, the first node selects, from the plurality of local prior distributions maintained by the second node, a local prior distribution best matching the local training data, and uses the local prior distribution as the prior distribution of the parameter in the local model.
The prior distribution and the posterior distribution of the parameter in the local model correspond to neural networks of a same size. In the local training process, the first node performs Bayesian optimization by using a Gaussian distribution as a likelihood function.

4.2 Initialization process

The second node initializes the prior distribution of the parameter in the federated model. The prior distribution of the parameter in the federated model includes N local prior distributions (N is an integer greater than 1). The N local prior distributions are in a one-to-one correspondence with N neural networks. $P_i^g(\theta|\eta)$ represents a local prior distribution that is in the federated model and that corresponds to an $i^{th}$ neural network, $\theta$ represents a parameter in the $i^{th}$ neural network, and $\eta$ is used to describe a prior value of distribution of $\theta$. Using a Gaussian distribution as an example, $\eta$ may be [mean, variance] of the Gaussian distribution.
The second node sends the N local prior distributions to different first nodes. If privacy protection of data is considered, the second node may alternatively send different local prior distributions to a same first node.

A first node that receives the local prior distribution corresponding to the $i^{th}$ neural network may use $P_i^g(\theta|\eta)$ as a prior distribution of a parameter in a local model, and perform training by using local training data to obtain a posterior distribution of the parameter in the local model.
The local training process is essentially an optimization process, and formula (10) may be used as an optimization objective:

$$\max_{q_i^{\ln}} : E_{q_i^{\ln}} \{\log p(D_i^n | \theta) - D_{KL}[q_i^{\ln}(\theta) \| p_i^g(\theta | \eta)]\} \tag{10}$$

$q_i^{\ln}(\theta)$ represents the posterior distribution of the parameter in the local model, $\log p(D_i^n | \theta)$ represents a likelihood function corresponding to a given model parameter, and $D_{KL}$ represents KL divergence.

The first node may perform optimization through re-parameterization to obtain the posterior distribution $q_i^{\ln}(\theta)$ of the parameter in the local model.

After the training ends, the first node may send the trained posterior distribution $q_i^{\ln}(\theta)$ of the parameter in the local model to the second node. The second node may update (or optimize), by using formula (11), the prior distribution of the parameter in the federated model based on the posterior distribution that is of the parameter in the local model and that is provided by each first node:

$$\max_{P_i^g} : -\sum_{n=1}^{Ni} D_{KL}[q_k(\theta) \| P_i^g(\theta | \eta)] + \log P(\eta) \tag{11}$$

4.3. Local training process

A first node selected by the second node may obtain, from the second node, the prior distribution $P_i^g(\theta | \eta)$ of the parameter in the federated model, where i=1, 2, ..., and N. Then, the first node may test a degree of matching between the local training data and each local prior distribution in the prior distribution of the parameter in the federated model, and select a local prior distribution $P_{i*}^g(\theta | \eta)$ with a highest matching degree.

Then, the first node may use $P_{i*}^g(\theta | \eta)$ as a prior distribution of a parameter in a local model to train a posterior distribution of the parameter in the local model by using the local training data.

Formula (12) may be used as an optimization objective in the local training process:

$$\max_{q_{i*}^{\ln}} : E_{q_{i*}^{\ln}} \{\log p(D_{i*}^n | \theta) - D_{KL}[q_{i*}^{\ln}(\theta) \| p_{i*}^g(\theta | \eta)]\} \tag{12}$$

$q_{i*}^{\ln}(\theta)$ represents the posterior distribution of the parameter in the local model, $\log p(D_{i*}^n | \theta)$ represents a likelihood function corresponding to the parameter in the local model, and $D_{KL}$ represents KL divergence.

The first node may perform optimization through re-parameterization to determine an optimal solution of the posterior distribution of the parameter in the local model.

4.4. Process of updating (or optimizing) the prior distribution of the parameter in the federated model

After the first node participating in federated learning sends the posterior distribution of the parameter in the local model to the second node, the second node may update each neural network according to formula (13):

$$\max_{P_i^g} : -\sum_{n=1}^{Ni} D_{KL}[q_k(\theta) \| P_i^g(\theta | \eta)] + \log P(\eta) \tag{13}$$

**Example 5:**

5.1 Introduction to an application scenario

A federated model maintained by the second node maintains one neural network. Each parameter in the neural network is described by using one distribution. A prior distribution of the parameter in the neural network performs a point description for a posterior distribution. For example, the federated model is a Bayesian neural network, and each parameter in the Bayesian neural network is described by using a Gaussian distribution.

The first node uses a local prior distribution in the prior distribution of the parameter in the federated model as the prior distribution of the parameter in the local model.

The local model of the first node has a same size as the federated model, and the posterior distribution of the parameter in the local model is a delta distribution.

5.2 Initialization process

The second node initializes a neural network as the federated model. $P(\theta|\eta)$ represents the prior distribution of the parameter in the federated model, where $\theta$ represents a model parameter, and $\eta$ represents a prior value that describes distribution of $\theta$. Using a Gaussian distribution as an example, $\eta$=[mean, variance].

5.3. Local training process

First, a first node selected by the second node obtains, from the second node, the prior distribution $P(\theta|\eta)$ of the parameter in the federated model.

Then, the first node uses $P(\theta|\eta)$ as a prior distribution of a parameter in a local model to perform training by using local training data, to obtain a posterior distribution of the parameter in the local model.

Specifically, a training process of the posterior distribution of the parameter in the local model is an optimization process. An optimization objective may be defined by using formula (14):

$$\max_{\theta_k} : \{\log p(D_k|\theta_k) + p(\theta_k|\eta)\} \tag{14}$$

In formula (14), $\theta_k$ represents the parameter in the local model, and $\log p(D_k|\theta_k)$ represents a likelihood function corresponding to a given model parameter. A gradient descent method may be used to train a posterior distribution $\delta(\theta_k)$ of a parameter $\theta_k$ in the local model. $\delta(\theta_k)$ indicates that the posterior distribution is a delta distribution.

5.4. Process of updating (or optimizing) the prior distribution of the parameter in the federated model

After the first node participating in federated learning sends the posterior distribution of the parameter in the local model to the second node, the second node may update each neural network according to formula (15):

$$\max_{P} : -\sum_{n=1}^{Ni} D_{KL}[\delta(\theta_k)\|P(\theta|\eta)] + \log P(\eta) \tag{15}$$

$P(\eta)$ in formula (15) represents distribution of $\eta$, and the distribution may be manually set in advance.

**Example 6:**

6.1 Application scenario

Example 6 aims to provide a solution for measuring importance of each first node, so that a first node participating in federated learning can be selected in a federated learning process based on importance of the first node, and stability of the entire training process of federated learning is optimal.

For example, a weight may be set for the first node based on a model variance of a parameter in a local model of the first node, and the first node participating in federated learning is selected based on the weight of the first node, or whether a specific first node needs to update a posterior distribution of a parameter in a local model is selected based on a weight of the first node.

First, weights $r(D_k)$ corresponding to different first nodes may be set. $D_k$ represents local training data of a $k^{th}$

first node. Therefore, the weight of the first node may also be understood as measurement of importance of the local training data of the first node.

Then, the second node may minimize, according to formula (16), a variance of a posterior distribution that is of a parameter in a local model and that is fed back by each first node:

$$\arg\min_{r(D_k)} \int_\theta \sum r(D_k) \frac{q^2(\theta|D_k) p_{data}^2(D_k)}{r^2(D_k)} \qquad (16)$$

In formula (16), $p_{data}(D_k)$ represents a probability that $D_k$ appears in a data set including local training data of all first nodes. Considering that the sum of weights should be 1, formula (16) may be converted into the following formula (17):

$$\arg\min_{r(D_k)} \int_\theta \sum r(D_k) \frac{q^2(\theta|D_k) p_{data}^2(D_k)}{r^2(D_k)} - \lambda(\sum_k r(D_k) - 1) d\theta \qquad (17)$$

A relationship $r(D_k) \propto \sqrt{\int_\Theta q_k^2(\theta|D_k) d\theta}$ between the weight of the first node and the posterior distribution of the parameter in the local model may be obtained by solving the foregoing formula. If the posterior distribution of the local model is the Gaussian distribution, the relationship between the weight of the first node and the posterior distribution of the parameter in the local model may be expressed as $r(D_k) \propto (\prod_j \sigma_{j,k})^{-\frac{1}{4}}$ (j is a quantity of parameters in the local model).

The second node may select, based on $r(D_k)$, a first node that needs to upload the posterior distribution of the parameter in the local model. The first node may also determine, based on $r(D_k)$, whether the first node needs to send a local training result to the second node. For example, $r(D_k)$ may be compared with a fixed threshold to determine whether the first node needs to send the local training result to the second node. Alternatively, a probability of selecting the first node may be calculated based on $r(D_k)$, and then it is determined, based on the probability, whether the local training result needs to be sent to the second node.

**Example 7:**

Example 7 aims to provide a solution for simplifying a federated model, so that when a parameter in the federated model is superposition of a relatively large quantity of distributions, superposition of the relatively large quantity of distributions is approximated by superposition of a relatively small quantity of distributions.

For example, after K first nodes upload posterior distributions $q_k(\theta)$ of parameters in local models to the second node, the second node updates the prior distribution of the parameter in the federated model according to the following formula (18):

$$\max_p : -\sum_{k=1}^K D_{KL}\left[q_k(\theta) \big\| p(\theta|\eta)\right] \qquad (18)$$

In formula (18), $D_{KL}$ represents KL divergence, and $p(\theta|\eta)$ represents the prior distribution of the parameter in the federated model.

An optimal solution of formula (18) may be represented by using formula (19):

$$p^*(\theta) = \frac{1}{K}\sum_{k=1}^K q_k(\theta) \qquad (19)$$

Assuming that the posterior distribution of the parameter in the local model obeys a Gaussian distribution, the prior distribution of the parameter in the federated model in formula (19) obeys a mixed Gaussian distribution, where each parameter has a mixed Gaussian distribution including K components. It may be learned that a scale of the parameter in the federated model is K times larger than that of the parameter in the local model, which causes relatively large communication overheads.

To limit communication overheads, the parameter in the federated model may be optimized by using formula (20), and the parameter in the federated model is defined as a mixed Gaussian distribution including a maximum of M components (M<K):

$$P(\theta|\eta) = \sum_{m=1}^{M} \rho_m \cdot N(\theta|\mu_m, \Sigma_m) \tag{20}$$

In formula (20), $\rho_m$ represents a proportion of an $m^{th}$ component in the M components. $\mu_m, \Sigma_m$ respectively represent a mean and a covariance matrix of the Gaussian distribution. Then, a prior distribution-a Dirichlet distribution (Dirichlet distribution) of $\rho_m$ may be introduced, so that optimized $\rho_m$ becomes sparse (for example, a relatively large quantity of elements 0 are included), and a final mixed distribution of a parameter includes a maximum of M components. It may be learned that a parameter with the Dirichlet distribution may be adjusted to make a compromise between precision and complexity of the federated model (that is, a quantity of components included in each parameter determines communication overheads in a federated learning process).

**Example 8:**

A type of a posterior distribution of a parameter in a local model is not specifically limited in this application. Example 8 aims to give a specific posterior distribution.

Specifically, the posterior distribution of the parameter in the local model may obey a distribution shown in formula (21):

$$\theta \sim N(\mu_k, \lambda(\mu_k - \mu)^2) \tag{21}$$

In formula (21), $\theta$ is the posterior distribution of the parameter in the local model, $\mu$ is a mean of a prior distribution, and $\mu_k$ is a mean of the posterior distribution.

It may be learned from formula (21) that when the mean of the posterior distribution of the parameter in the local model is relatively far from the mean of the prior distribution, a variance of the posterior distribution is also relatively large. In this way, when the distribution form shown in formula (21) is used, the posterior distribution and the prior distribution of the parameter in the local model may overlap as much as possible, so that a local training process becomes more reliable.

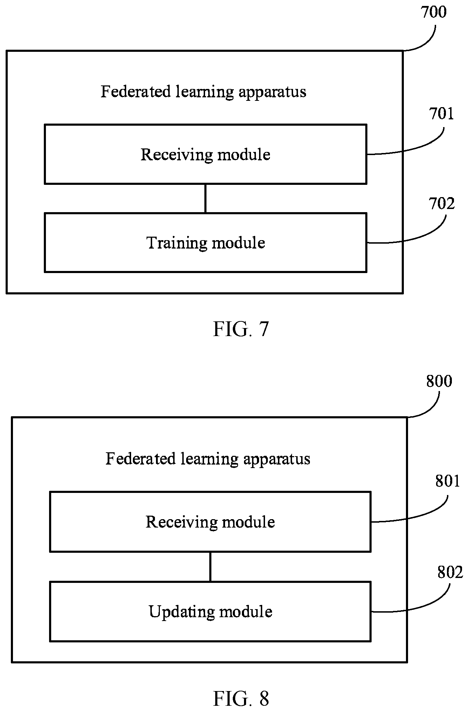

The foregoing describes the method embodiment of this application in detail with reference to FIG. 1 to FIG. 6. The following describes apparatus embodiments of this application in detail with reference to FIG. 7 to FIG. 8. It should be understood that, descriptions of the method embodiment correspond to descriptions of the apparatus embodiments. Therefore, for a part that is not described in detail, refer to the foregoing method embodiment.

FIG. 7 is a schematic diagram of a structure of a federated learning apparatus according to an embodiment of this application. The federated learning apparatus 700 corresponds to the foregoing first node, and the apparatus 700 is communicatively connected to a second node.

As shown in FIG. 7, the apparatus 700 includes a receiving module 701 and a training module 702. The receiving module 701 may be configured to receive, from the second node, a prior distribution of a parameter in a federated model, where the federated model is a machine learning model whose parameter obeys a distribution. The training module 702 may be configured to perform training based on the prior distribution of the parameter in the federated model and local training data of the apparatus, to obtain a posterior distribution of a parameter in a local model of the apparatus.

Optionally, in some embodiments, the apparatus 700 may further include: a first determining module, configured to determine an uncertainty degree of the local model based on the posterior distribution of the parameter in the local model; and a first sending module, configured to send the posterior distribution of the parameter in the local model to the second node when the uncertainty degree of the local model meets a first preset condition.

Optionally, in some embodiments, the apparatus 700 may further include: a second determining module, configured to determine an uncertainty degree of a first parameter in the local model based on a posterior distribution of the first parameter, where the local model includes at least one parameter, and the first parameter is any of the at least one parameter; and a second sending module, configured to send the posterior distribution of the first parameter to the second node when the uncertainty degree of the first parameter meets a second preset condition.

Optionally, in some embodiments, the apparatus 700 may further include: a third determining module, configured to: determine an uncertainty degree of the local model based on the posterior distribution of the parameter in the local model; and when the uncertainty degree of the local model meets a first preset condition, determine an uncertainty degree of a first parameter in the local model based on a posterior distribution of the first parameter, where the local model includes at least one parameter, and the first parameter is any of the at least one parameter; and a third sending module, configured to send the posterior distribution of the first parameter to the second node when the uncertainty degree of the first parameter meets a second preset condition.

FIG. 8 is a schematic diagram of a structure of a federated learning apparatus according to another embodiment of this application. The federated learning apparatus 800 corresponds to the foregoing second node, and the apparatus 800 is communicatively connected to a first node.

As shown in FIG. 8, the apparatus 800 includes a receiving module 801 and an updating module 802. The receiving module 801 may be configured to receive a posterior distribution of a parameter in a local model of at least one first node. The updating module 802 may be configured to update a prior distribution of a parameter in a federated model based on the posterior distribution of the parameter in the local model of the at least one first node, where the federated model is a machine learning model whose parameter obeys a distribution.

Optionally, in some embodiments, the apparatus 800 may further include: a selection module, configured to select the at least one first node from a candidate node before the apparatus receives the posterior distribution of the parameter in the local model of the at least one first node, where federated learning includes a plurality of rounds of iterations, the at least one first node is a node participating in a current round of iteration, and the candidate node is a node participating in federated learning before the current round of iteration; and a first sending module, configured to send the prior distribution of the parameter in the federated model to the at least one first node before the apparatus receives the posterior distribution of the parameter in the local model of the at least one first node.

Optionally, in some embodiments, the selection module is configured to select the at least one first node from the candidate node based on evaluation information sent by the candidate node to the apparatus, where the evaluation information is used to indicate a degree of matching between the prior distribution of the parameter in the federated model and local training data of the candidate node, or the evaluation information is used to indicate a degree of matching between the local training data of the candidate node and a posterior distribution obtained by the candidate node through training based on the prior distribution of the parameter in the federated model, or the evaluation information is used to indicate a degree of matching between the prior distribution of the parameter in the federated model and the posterior distribution obtained by the candidate node through training based on the prior distribution of the parameter in the federated model.

Optionally, in some embodiments, the selection module is configured to select the at least one first node from the candidate node based on a difference between a historical posterior distribution of the candidate nodes and the prior distribution of the parameter in the federated model, where the historical posterior distribution is a posterior distribution that is of the parameter in the local model and that is obtained by the candidate node before the current round of iteration.

Optionally, in some embodiments, the local model includes no parameter whose uncertainty degree does not meet a preset condition.

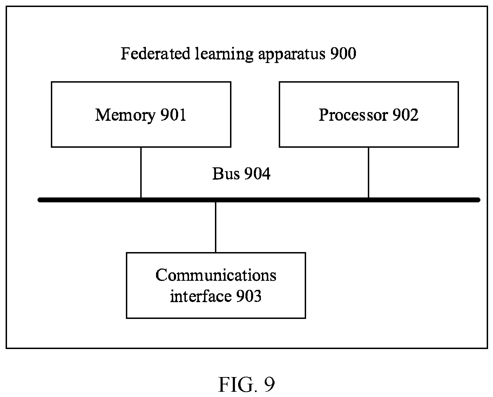

FIG. 9 is a schematic diagram of a hardware structure of a federated learning apparatus according to an embodiment of this application. The federated learning apparatus 900 (the apparatus 900 may specifically be a computer device) shown in FIG. 9 includes a memory 901, a processor 902, a communication interface 903, and a bus 904. The memory 901, the processor 902, and the communication interface 903 implement mutual communication connections through the bus 904.

The memory 901 may be a read-only memory (read-only memory, ROM), a static storage device, a dynamic storage device, or a random access memory (random access memory, RAM). The memory 901 may store a program, and when the program stored in the memory 901 is executed by the processor 902, the processor 902 and the communication interface 903 are configured to perform the steps of the federated learning method in embodiments of this application.

The processor 902 may be a general-purpose CPU, a microprocessor, an application-specific integrated circuit (application-specific integrated circuit, ASIC), a graphics processing unit (graphics processing unit, GPU), or one or more integrated circuits configured to execute a related program, to implement a function that needs to be executed by the module in the federated learning apparatus in the embodiments of this application, or perform the federated learning method in the method embodiments of this application.

The processor 902 may alternatively be an integrated circuit chip and has a signal processing capability. In an implementation process, steps of the federated learning method in this application may be implemented by using a hardware integrated logical circuit in the processor 902, or by using instructions in a form of software. Alternatively, the processor 902 may be a general-purpose processor, a digital signal processor (digital signal processor, DSP), an application-specific integrated circuit (ASIC), a field programmable gate array (field programmable gate array, FPGA) or another programmable logic device, a discrete gate or a transistor logic device, or a discrete hardware component. The processor may implement or perform the methods, the steps, and logical block diagrams that are disclosed in embodiments of this application. The general-purpose processor may be a microprocessor, or the processor may be any conventional processor or the like. The steps of the method disclosed with reference to embodiments of this application may be directly performed and completed by a hardware decoding processor, or may be performed and completed by using a combination of hardware and software modules in the decoding processor. The software module may be located in a mature storage medium in the art, such as a random access memory, a flash memory, a read-only memory, a programmable read-only memory, an electrically erasable programmable memory, or a register. The storage medium is located in the memory 901. The processor 902 reads information in the memory 901, and completes, in combination with hardware of the processor 902, the function that needs to be performed by the module of the federated learning apparatus in this embodiment of this application, or perform the federated learning method in the method embodiment of this application.

The communication interface 903 uses a transceiver apparatus, for example but not for limitation, a transceiver, to implement communication between the apparatus 900 and another device or communication network.

The bus 904 may include a path for transmitting information between the components (for example, the memory 901, the processor 902, and the communication interface 903) of the apparatus 900.

It should be understood that the receiving module 701 in the federated learning apparatus 700 is equivalent to the communication interface 903 in the federated learning apparatus 900, and the training module 702 may be equivalent to the processor 902. Alternatively, the receiving module 801 in the federated learning apparatus 800 is equivalent to the communication interface 903 in the federated learning apparatus 900, and the updating module 802 may be equivalent to the processor 902.

It should be noted that although only the memory, the processor, and the communication interface are shown in the apparatus 900 shown in FIG. 9, in a specific implementation process, a person skilled in the art should understand that the apparatus 900 further includes other components necessary for implementing a normal operation. In addition, based on a specific requirement, a person skilled in the art should understand that the apparatus 900 may further include hardware components for implementing other additional functions. In addition, a person skilled in the art should understand that the apparatus 900 may alternatively include only components necessary for implementing embodiments of this application, but does not necessarily include all the components shown in FIG. 9.

It may be clearly understood by a person skilled in the art that, for the purpose of convenient and brief description, for a detailed working process of the foregoing system, apparatus, and unit, refer to a corresponding process in the foregoing method embodiment. Details are not described herein again.

In the several embodiments provided in this application, it should be understood that the disclosed system, apparatus, and method may be implemented in other manners. For example, the described apparatus embodiments are merely examples. For example, division into units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may or may not be physical units, may be located in one position, or may be distributed on a plurality of network units. Some or all of the units may be selected based on an actual requirement to achieve objectives of the solutions of embodiments.

In addition, functional units in embodiments of this application may be integrated into one processing unit, or each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the method described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A federated learning method, comprising:

   receiving, by a first node from a second node, a prior distribution of a parameter in a federated model, wherein the federated model is a machine learning model whose parameter obeys a distribution; and

   performing, by the first node, training based on the prior distribution of the parameter in the federated model and local training data of the first node, to obtain a posterior distribution of a parameter in a local model of the first node.

2. The method according to claim 1, wherein the method further comprises:

   determining, by the first node, an uncertainty degree of the local model based on the posterior distribution of the parameter in the local model; and

   sending, by the first node, the posterior distribution of the parameter in the local model to the second node when the uncertainty degree of the local model meets a first preset condition.

3. The method according to claim 2, wherein the uncertainty degree of the local model is measured based on at least one piece of the following information: a variance of the posterior distribution of the parameter in the local model, a convergence speed of the posterior distribution of the parameter in the local model, or inferential accuracy of the posterior distribution of the parameter in the local model.

4. The method according to claim 1, wherein the method further comprises:

   determining, by the first node, an uncertainty degree of a first parameter in the local model based on a posterior distribution of the first parameter, wherein the local model comprises at least one parameter, and the first parameter is any one of the at least one parameter; and

   sending, by the first node, the posterior distribution of the first parameter to the second node when the uncertainty degree of the first parameter meets a second preset condition.

5. The method according to claim 4, wherein the uncertainty degree of the first parameter is measured based on a variance of the posterior distribution of the first parameter.

6. The method according to claim 1, wherein the method further comprises:

   determining, by the first node, an uncertainty degree of the local model based on the posterior distribution of the parameter in the local model;

   when the uncertainty degree of the local model meets a first preset condition, determining, by the first node, an uncertainty degree of a first parameter in the local model based on a posterior distribution of the first parameter, wherein the local model comprises at least one parameter, and the first parameter is any of the at least one parameter; and

   sending, by the first node, the posterior distribution of the first parameter to the second node when the uncertainty degree of the first parameter meets a second preset condition.

7. The method according to any one of claims 1 to 6, wherein the prior distribution of the parameter in the federated model comprises a plurality of local prior distributions, and the plurality of local prior distributions are in a one-to-one correspondence with a plurality of Bayesian models; and

   the performing, by the first node, training based on the prior distribution of the parameter in the federated model and local training data of the first node, to obtain a posterior distribution of a parameter in a local model of the first node comprises:

   determining, by the first node, a prior distribution of the parameter in the local model of the first node based on degrees of matching between the local training data and the plurality of local prior distributions; and

   performing, by the first node, training based on the prior distribution of the parameter in the local model and the local training data, to obtain the posterior distribution of the parameter in the local model.

8. The method according to claim 7, wherein federated learning comprises a plurality of rounds of iterations, and the posterior distribution of the parameter in the local model is a posterior distribution that is of the parameter in the local model and that is obtained through a current round of iteration; and
the determining, by the first node, a prior distribution of the parameter in the local model of the first node based on degrees of matching between the local training data and the plurality of local prior distributions comprises:
determining, by the first node, the prior distribution of the parameter in the local model of the first node based on differences between a historical posterior distribution and the plurality of local prior distributions, wherein the historical posterior distribution is a posterior distribution that is of the parameter in the local model and that is obtained by the first node before the current round of iteration.

9. The method according to claim 8, wherein the prior distribution of the parameter in the local model is a prior distribution in the plurality of local prior distributions that has a smallest difference from the historical posterior distribution; or the prior distribution of the parameter in the local model is a weighted sum of the plurality of local prior distributions, and weights respectively occupied by the plurality of local prior distributions in the weighted sum are determined by the differences between the historical posterior distribution and the plurality of local prior distributions.

10. The method according to claim 1, wherein the method further comprises:
sending, by the first node, the posterior distribution of the parameter in the local model to the second node.

11. The method according to any one of claims 1 to 10, wherein the machine learning model is a neural network.

12. The method according to any one of claims 1 to 11, wherein the prior distribution of the parameter in the federated model is a probability distribution of the parameter in the federated model, or a probability distribution of the probability distribution of the parameter in the federated model.

13. The method according to any one of claims 1 to 12, wherein the first node and the second node are respectively a client and a server in a network.

14. A federated learning method, comprising:

receiving, by a second node, a posterior distribution of a parameter in a local model of at least one first node; and
updating, by the second node, a prior distribution of a parameter in a federated model based on the posterior distribution of the parameter in the local model of the at least one first node, wherein the federated model is a machine learning model whose parameter obeys a distribution.

15. The method according to claim 14, wherein before the receiving, by a second node, a posterior distribution of a parameter in a local model of at least one first node, the method further comprises:

selecting, by the second node, the at least one first node from a candidate node, wherein federated learning comprises a plurality of rounds of iterations, the at least one first node is a node participating in a current round of iteration, and the candidate node is a node participating in the federated learning before the current round of iteration; and
sending, by the second node, the prior distribution of the parameter in the federated model to the at least one first node.

16. The method according to claim 15, wherein the selecting, by the second node, the at least one first node from a candidate node comprises:
selecting, by the second node, the at least one first node from the candidate node based on evaluation information sent by the candidate node to the second node, wherein the evaluation information is used to indicate a degree of matching between the prior distribution of the parameter in the federated model and local training data of the candidate node, or the evaluation information is used to indicate a degree of matching between the local training data of the candidate node and a posterior distribution obtained by the candidate node through training based on the prior distribution of the parameter in the federated model, or the evaluation information is used to indicate a degree of matching between the prior distribution of the parameter in the federated model and the posterior distribution obtained by the candidate node through training based on the prior distribution of the parameter in the federated model.

17. The method according to claim 15, wherein the selecting, by the second node, the at least one first node from a candidate node comprises:
selecting, by the second node, the at least one first node from the candidate node based on a difference between a historical posterior distribution of the candidate node and the prior distribution of the parameter in the federated model, wherein the historical posterior distribution is a posterior distribution that is of the parameter in the local model and that is obtained by the candidate node before the current round of iteration.

18. The method according to any one of claims 14 to 17, wherein the local model comprises no parameter whose uncertainty degree does not meet a preset condition.

19. The method according to any one of claims 14 to 18, wherein the at least one first node comprises a plurality of first nodes, and posterior distributions of parameters in local models of the plurality of first nodes each comprise a posterior distribution of a first parameter; and
the updating, by the second node, a prior distribution of a parameter in a federated model based on the posterior distribution of the parameter in the local model of the at least one first node comprises:
if a difference between the posterior distributions of the first parameters of the plurality of first nodes is greater than a preset threshold, updating, by the second node, the prior distribution of the parameter in the federated model to split the first parameters into a plurality of parameters.

20. The method according to any one of claims 14 to 19, wherein the prior distribution of the parameter in the federated model comprises a plurality of local prior distributions, and the plurality of local prior distributions are in a one-to-one correspondence with a plurality of Bayesian models.

21. The method according to any one of claims 14 to 20, wherein the machine learning model is a neural network.

22. The method according to any one of claims 14 to 21, wherein the prior distribution of the parameter in the federated model is a probability distribution of the parameter in the federated model, or a probability distribution of the probability distribution of the parameter in the federated model.

23. The method according to any one of claims 14 to 22, wherein the first node and the second node are respectively a client and a server in a network.

24. A federated learning apparatus, wherein the apparatus is a first node communicatively connected to a second node, and the apparatus comprises:

   a receiving module, configured to receive, from a second node, a prior distribution of a parameter in a federated model, wherein the federated model is a machine learning model whose parameter obeys a distribution; and
   a training module, configured to perform training based on the prior distribution of the parameter in the federated model and local training data of the apparatus, to obtain a posterior distribution of a parameter in a local model of the apparatus.

25. The apparatus according to claim 24, wherein the apparatus further comprises:

   a first determining module, configured to determine an uncertainty degree of the local model based on the posterior distribution of the parameter in the local model; and
   a first sending module, configured to send the posterior distribution of the parameter in the local model to the second node when the uncertainty degree of the local model meets a first preset condition.

26. The apparatus according to claim 25, wherein the uncertainty degree of the local model is measured based on at least one piece of the following information: a variance of the posterior distribution of the parameter in the local model, a convergence speed of the posterior distribution of the parameter in the local model, or inferential accuracy of the posterior distribution of the parameter in the local model.

27. The apparatus according to claim 24, wherein the apparatus further comprises:

   a second determining module, configured to determine an uncertainty degree of a first parameter in the local model based on a posterior distribution of the first parameter, wherein the local model comprises at least one parameter, and the first parameter is any of the at least one parameter; and
   a second sending module, configured to send the posterior distribution of the first parameter to the second node when the uncertainty degree of the first parameter meets a second preset condition.

28. The apparatus according to claim 27, wherein the uncertainty degree of the first parameter is measured based on a variance of the posterior distribution of the first parameter.

29. The apparatus according to claim 24, wherein the apparatus further comprises:

a third determining module, configured to: determine an uncertainty degree of the local model based on the posterior distribution of the parameter in the local model; and when the uncertainty degree of the local model meets a first preset condition, determine an uncertainty degree of a first parameter in the local model based on a posterior distribution of the first parameter, wherein the local model comprises at least one parameter, and the first parameter is any of the at least one parameter; and
a third sending module, configured to send the posterior distribution of the first parameter to the second node when the uncertainty degree of the first parameter meets a second preset condition.

30. The apparatus according to any one of claims 24 to 29, wherein the prior distribution of the parameter in the federated model comprises a plurality of local prior distributions, and the plurality of local prior distributions are in a one-to-one correspondence with a plurality of Bayesian models; and
the training module is configured to: determine a prior distribution of the parameter in the local model of the apparatus based on degrees of matching between the local training data and the plurality of local prior distributions, and perform training based on the prior distribution of the parameter in the local model and the local training data, to obtain the posterior distribution of the parameter in the local model.

31. The apparatus according to claim 30, wherein federated learning comprises a plurality of rounds of iterations, and the posterior distribution of the parameter in the local model is a posterior distribution that is of the parameter in the local model and that is obtained through a current round of iteration; and
the training module is configured to determine the prior distribution of the parameter in the local model of the apparatus based on differences between a historical posterior distribution and the plurality of local prior distributions, wherein the historical posterior distribution is a posterior distribution that is of the parameter in the local model and that is obtained by the apparatus before the current round of iteration.

32. The apparatus according to claim 31, wherein the prior distribution of the parameter in the local model is a prior distribution in the plurality of local prior distributions that has a smallest difference from the historical posterior distribution; or the prior distribution of the parameter in the local model is a weighted sum of the plurality of local prior distributions, and weights respectively occupied by the plurality of local prior distributions in the weighted sum are determined by the differences between the historical posterior distribution and the plurality of local prior distributions.

33. The apparatus according to claim 24, wherein the apparatus further comprises:
a third sending module, configured to send the posterior distribution of the parameter in the local model to the second node.

34. The apparatus according to any one of claims 24 to 33, wherein the machine learning model is a neural network.

35. The apparatus according to any one of claims 24 to 34, wherein the prior distribution of the parameter in the federated model is a probability distribution of the parameter in the federated model, or a probability distribution of the probability distribution of the parameter in the federated model.

36. The apparatus according to any one of claims 24 to 35, wherein the apparatus and the second node are respectively a client and a server in a network.

37. A federated learning apparatus, wherein the apparatus is a second node communicatively connected to a first node, and the apparatus comprises:

a receiving module, configured to receive a posterior distribution of a parameter in a local model of at least one first node; and
an updating module, configured to update a prior distribution of a parameter in a federated model based on the posterior distribution of the parameter in the local model of the at least one first node, wherein the federated model is a machine learning model whose parameter obeys a distribution.

38. The apparatus according to claim 37, wherein the apparatus further comprises:

   a selection module, configured to select the at least one first node from a candidate node before the apparatus receives the posterior distribution of the parameter in the local model of the at least one first node, wherein federated learning comprises a plurality of rounds of iterations, the at least one first node is a node participating in a current round of iteration, and the candidate node is a node participating in the federated learning before the current round iteration; and
   a first sending module, configured to send the prior distribution of the parameter in the federated model to the at least one first node before the apparatus receives the posterior distribution of the parameter in the local model of the at least one first node.

39. The apparatus according to claim 38, wherein the selection module is configured to select the at least one first node from the candidate node based on evaluation information sent by the candidate node to the apparatus, wherein the evaluation information is used to indicate a degree of matching between the prior distribution of the parameter in the federated model and local training data of the candidate node, or the evaluation information is used to indicate a degree of matching between the local training data of the candidate node and a posterior distribution obtained by the candidate node through training based on the prior distribution of the parameter in the federated model, or the evaluation information is used to indicate a degree of matching between the prior distribution of the parameter in the federated model and the posterior distribution obtained by the candidate node through training based on the prior distribution of the parameter in the federated model.

40. The apparatus according to claim 38, wherein the selection module is configured to select the at least one first node from the candidate node based on a difference between a historical posterior distribution of the candidate node and the prior distribution of the parameter in the federated model, wherein the historical posterior distribution is a posterior distribution that is of the parameter in the local model and that is obtained by the candidate node before the current round of iteration.

41. The apparatus according to any one of claims 37 to 40, wherein the local model comprises no parameter whose uncertainty degree does not meet a preset condition.

42. The apparatus according to any one of claims 37 to 41, wherein the at least one first node comprises a plurality of first nodes, posterior distributions of parameters in local models of the plurality of first nodes each comprise a posterior distribution of a first parameter, and the updating module is configured to: when a difference between the posterior distributions of the first parameters of the plurality of first nodes is greater than a preset threshold, update the prior distribution of the parameter in the federated model to split the first parameters into a plurality of parameters.

43. The apparatus according to any one of claims 37 to 42, wherein the prior distribution of the parameter in the federated model comprises a plurality of local prior distributions, and the plurality of local prior distributions are in a one-to-one correspondence with a plurality of Bayesian models.

44. The apparatus according to any one of claims 37 to 43, wherein the machine learning model is a neural network.

45. The apparatus according to any one of claims 37 to 44, wherein the prior distribution of the parameter in the federated model is a probability distribution of the parameter in the federated model, or a probability distribution of the probability distribution of the parameter in the federated model.

46. The apparatus according to any one of claims 37 to 45, wherein the first node and the apparatus are respectively a client and a server in a network.

47. A chip, wherein the chip comprises a processor and a data interface, and the processor reads, through the data interface, instructions stored in a memory, to perform the method according to any one of claims 1 to 23.

48. The chip according to claim 47, wherein the chip may further comprise a memory, the memory stores instructions, a processor is configured to execute the instructions stored in the memory, and when the instructions are executed, the processor is configured to perform the method according to any one of claims 1 to 23.

49. A computer-readable storage medium, comprising instructions, wherein when the instructions are run on a computer, the computer is enabled to perform the method according to any one of claims 1 to 23.

**50.** A computer program product comprising instructions, wherein when the computer program product runs on a computer, the computer is enabled to perform the method according to any one of claims 1 to 23.

Second node ⌇ 105

First node    First node    First node

102           102           102

FIG. 1

S210

A second node constructs a federated model

S220

The second node selects a first node

S230

The first node obtains or receives the federated model from the second node

S240

The first node trains the federated model by using local training data to obtain a local model

S250

The second node aggregates local models obtained by first nodes through training to obtain an updated federated model

FIG. 2

FIG. 3

First node

Second node

First node

S410. Prior distribution of a parameter in a federated model

S410. Prior distribution of a parameter in a federated model

S420. Perform training based on the prior distribution of the parameter in the federated model and local training data, to obtain a posterior distribution of a parameter in a local model

S420. Perform training based on the prior distribution of the parameter in the federated model and local training data, to obtain a posterior distribution of a parameter in a local model

S430. Posterior distribution of the parameter in the local model

S430. Posterior distribution of the parameter in the local model

S440. Update the prior distribution of the parameter in the federated model based on the posterior distribution of the parameter in the local model of at least one first node

FIG. 4

S420

A first node determines a prior distribution of a parameter in a local model based on a prior distribution of a parameter in a federated model

S422

The first node performs training based on the prior distribution of the parameter in the local model and local training data of the first node, to obtain a posterior distribution of the parameter in the local model of the first node

S424

FIG. 5

A second node selects at least one first node from a candidate node

S610

The second node sends a prior distribution of a parameter in a federated model to the at least one first node

S620

FIG. 6

FIG. 7

FIG. 8

EP 4 156 039 A1

Federated learning apparatus 900

Memory 901

Processor 902

Bus 904

Communications interface 903

FIG. 9

41

## INTERNATIONAL SEARCH REPORT

| | International application No. |
|---|---|
| | **PCT/CN2021/100098** |

**A. CLASSIFICATION OF SUBJECT MATTER**

G06N 20/00(2019.01)i

According to International Patent Classification (IPC) or to both national classification and IPC

**B. FIELDS SEARCHED**

Minimum documentation searched (classification system followed by classification symbols)

G06N

Documentation searched other than minimum documentation to the extent that such documents are included in the fields searched

Electronic data base consulted during the international search (name of data base and, where practicable, search terms used)

CNPAT, WPI, EPODOC, CNKI, ISI: 联邦, 分布式, 学习, 训练, 网络, 神经网络, 模型, 先验, 后验, 贝叶斯, 高斯, federated, learning, distributed, train, neural network, model, prior, posterior, bayes, gauss

**C. DOCUMENTS CONSIDERED TO BE RELEVANT**

| Category* | Citation of document, with indication, where appropriate, of the relevant passages | Relevant to claim No. |
|---|---|---|
| PX | CN 111898764 A (HUAWEI TECHNOLOGIES CO., LTD.) 06 November 2020 (2020-11-06) claims 1-48, description paragraphs [0073]-[0357] | 1-50 |
| Y | CN 110490335 A (SHENZHEN QIANHAI WEBANK CO., LTD.) 22 November 2019 (2019-11-22) description, paragraphs [0055]-[0064], [0121]-[0124], figure 1 | 1, 10-14, 18, 20-24, 33-37, 41, 43-50 |
| Y | CN 108876038 A (CHINA INSTITUTE OF ATOMIC ENERGY et al.) 23 November 2018 (2018-11-23) description paragraphs [0053]-[0086] | 1, 10-14, 18, 20-24, 33-37, 41, 43-50 |
| A | CN 111190487 A (INSTITUTE OF COMPUTING TECHNOLOGY, CHINESE ACADEMY OF SCIENCES) 22 May 2020 (2020-05-22) entire document | 1-50 |
| A | YUROCHKIN, Mikhail et al. ""Bayesian Nonparametric Federated Learning of Neural Networks"" *Proceedings of the 36th International Conference on Machine Learning,* 31 December 2019 (2019-12-31), entire document | 1-50 |

☐ Further documents are listed in the continuation of Box C.  ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **13 August 2021** | **01 September 2021** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088 China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/100098**

| Patent document cited in search report | | | Publication date (day/month/year) | Patent family member(s) | Publication date (day/month/year) |
|---|---|---|---|---|---|
| CN | 111898764 | A | 06 November 2020 | None | |
| CN | 110490335 | A | 22 November 2019 | None | |
| CN | 108876038 | A | 23 November 2018 | None | |
| CN | 111190487 | A | 22 May 2020 | None | |

Form PCT/ISA/210 (patent family annex) (January 2015)